# EUROPEAN PATENT APPLICATION

(11) **EP 4 810 144 A1**
(43) Date of publication of application: **23.09.2026**
(21) Application number: 24891228.9
(22) Date of filing: 31.10.2024
(51) Int. Cl.: B01D 19/04, C10M 155/02, C10N 30/18, C10N 40/04, C10N 40/25

(54) **ANTI-FOAMING AGENT, LUBRICATING OIL COMPOSITION CONTAINING ANTI-FOAMING AGENT, AND MACHINE USING LUBRICATING OIL COMPOSITION**

(30) Priority: 14.11.2023 JP 2023193557
(71) Applicant: DIC Corporation, Tokyo 174-8520 (JP)
(72) Inventor: FUJIWARA, Ryuta, Ichihara-shi, Chiba 290-8585 (JP)
(74) Representative: TBK
(86) International application number: PCT/JP2024/038817
(87) International publication number: WO 2025/105187

(57) **Abstract**

Provided is an anti-foaming agent exhibiting excellent anti-foaming properties even in a high-temperature environment. Disclosed is an anti-foaming agent having a polysiloxane structure represented by -[OSi(R)₂]ₓ- (R is each independently an alkyl group having from 1 to 6 carbon atoms, and x is the number of repetitions), having a functional group represented by a polymerizable monomer (a1) having two or more polymerizable unsaturated groups and/or -Si[OSi(R)₃]ₙ [R']₃₋ₙ (n is an integer of from 1 to 3, R is each independently an alkyl group having from 1 to 6 carbon atoms, R' is each independently an alkyl group having from 1 to 6 carbon atoms), and containing a polymer including a polymerizable monomer (A), which is a polymerizable monomer (a2) having two or more polymerizable unsaturated groups, as at least a polymerization component.

## Description

### TECHNICAL FIELD

The present invention relates to an anti-foaming agent, a lubricating oil composition containing the anti-foaming agent, and a machine using the lubricating oil composition.

### BACKGROUND ART

In recent years, reduction of carbon dioxide emissions has become an important theme in industry. Among them, carbon dioxide emission of transportation equipment, including automobiles, accounts for nearly 20% of the total, and as one of the countermeasures to reduce the emissions, switching from gasoline-powered vehicles to electric vehicles (EVs) has been proposed as a policy of each country.

The most important challenge in the EVs is improvement of fuel efficiency (electric cost), and for this purpose, studies on miniaturization of a vehicle body, improvement in efficiency of a drive system, and the like are being made at a rapid pace. One of the challenges in high efficiency of the drive system is the foaming of the lubricating oil. In order to reduce frictional resistance, the viscosity of the lubricating oil has been reduced, but this reduction in viscosity easily causes foaming of the lubricating oil.

Continuous high-load operation or high-speed driving increases foaming in the lubricating oil having a reduced viscosity and causes problems such as reduced lubricating performance or cooling efficiency due to foaming; wear and seizure due to breakage of oil films in friction portions; and acceleration of lubricating oil deterioration due to an increase in oil temperature.

Therefore, a lubricating oil having high anti-foaming properties is required so that foaming can be suppressed over a long period of time from the initial stage of operation, and the lubricating oil contains an anti-foaming agent for preventing foaming. As the anti-foaming agent, a polysiloxane-based anti-foaming agent is known, and various polysiloxane-based anti-foaming agents have been proposed (for example, Patent Document 1).

### CITATION LIST

### PATENT DOCUMENT

Patent Document 1: JP 2017-039924 A

### SUMMARY OF INVENTION

### TECHNICAL PROBLEM

A known polysiloxane-based anti-foaming agent has the problem of a significant decrease in anti-foaming properties with increasing temperature, for example, failing to provide sufficient anti-foaming properties in automotive applications where such anti-foaming properties are required at high temperatures.

An object of the present invention is to provide an anti-foaming agent exhibiting excellent anti-foaming properties even in a high-temperature environment.
Another object of the present invention is to provide a lubricating oil composition capable of exhibiting excellent lubricating performance even in a high-temperature environment.

### SOLUTION TO PROBLEM

As a result of intensive studies to solve the above problems, the present inventors have found that a polymer including, as at least a polymerization component, a polymerizable monomer having a specific silicone functional group and two or more polymerizable unsaturated groups is an anti-foaming agent exhibiting excellent anti-foaming properties even in a high-temperature environment, and thus have completed the present invention.

That is, the present invention relates to the following anti-foaming agent and the like.
[1] An anti-foaming agent having a polysiloxane structure represented by - [OSi(R)₂]ₓ- (R is each independently an alkyl group having from 1 to 6 carbon atoms, and x is a number of repetitions), having a functional group represented by a polymerizable monomer (a1) having two or more polymerizable unsaturated groups and/or -Si[OSi(R)₃]ₙ [R']₃₋ₙ (n is an integer of from 1 to 3, R is each independently an alkyl group having from 1 to 6 carbon atoms, and R' is each independently an alkyl group having from 1 to 6 carbon atoms), and containing a polymer including a polymerizable monomer (A), which is a polymerizable monomer (a2) having two or more polymerizable unsaturated groups, as at least a polymerization component.
[2] The anti-foaming agent according to [1], wherein the polymerizable monomer (A) is a compound represented by the following General Formula (A-1) and/or a compound represented by the following General Formula (A-2). 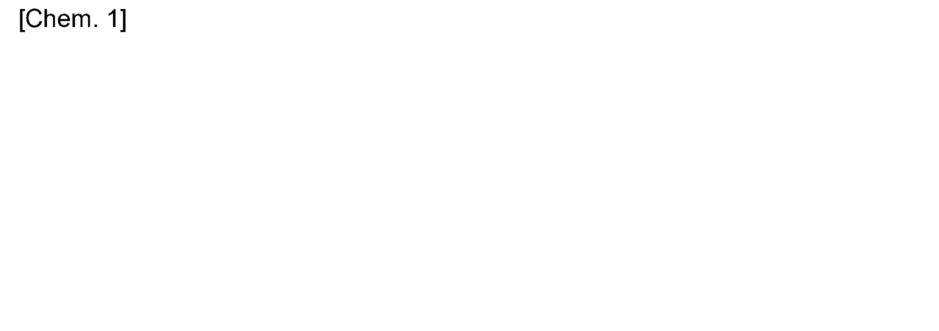 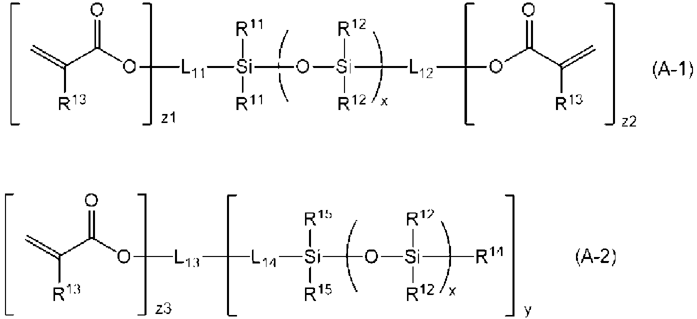 (In General Formula (A-1) and General Formula (A-2),
   R¹¹ is each independently an alkyl group having from 1 to 6 carbon atoms,
   R¹² is each independently an alkyl group having from 1 to 6 carbon atoms,
   R¹³ is each independently a hydrogen atom or a methyl group,
   R¹⁴ is an alkyl group having from 1 to 12 carbon atoms,
   R¹⁵ is each independently an alkyl group having from 1 to 6 carbon atoms or a group represented by -OSi(R¹⁶)₃ (R¹⁶ is each independently an alkyl group having from 1 to 6 carbon atoms),
   x represents a number of repetitions,
   y is an integer of 1 or more,
   z1 and z2 are each independently an integer of 1 or more,
   z3 is an integer of 2 or more,
   L₁₁ is an organic group optionally having a z1 + monovalent ether bond,
   L₁₂ is an organic group optionally having a z2 + monovalent ether bond,
   L₁₃ is an organic group optionally having a z3 + y-valent ether bond, and
   L₁₄ is a divalent organic group optionally having an ether bond or is a single bond)
[3] An anti-foaming agent containing a polymer including, as at least a polymerization component, a polymerizable monomer (A') which is a compound represented by the following General Formula (A-3). 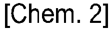 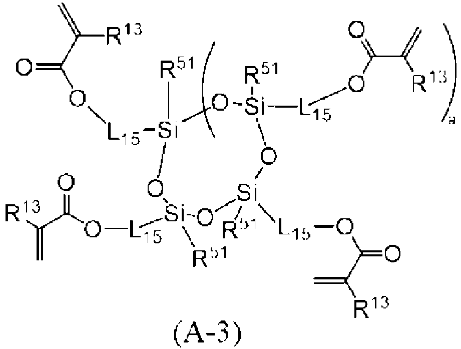 (In General Formula (A-3),
   R¹³ is each independently a hydrogen atom or a methyl group,
   R⁵¹ is each independently an alkyl group having from 1 to 6 carbon atoms,
   L₁₅ is a divalent organic group optionally having an ether bond, and
   a is a repeating unit and is an integer of from 0 to 3)
[4] An anti-foaming agent containing a polymer including, as at least a polymerization component, a polymerizable monomer (A") which is a compound represented by the following General Formula (A-4). 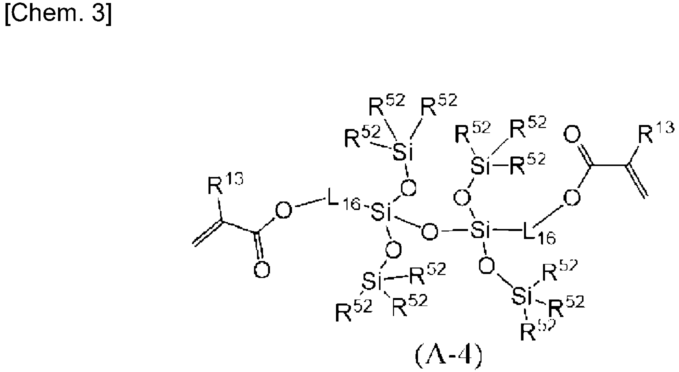 (In General Formula (A-4),
   R¹³ is each independently a hydrogen atom or a methyl group,
   R⁵² is each independently an alkyl group having from 1 to 6 carbon atoms, and
   L₁₆ is each independently a divalent organic group optionally having an ether bond)
[5] An anti-foaming agent containing a polymer including, as at least a polymerization component, a polymerizable monomer (A‴) which is a compound represented by the following General Formula (A-5). 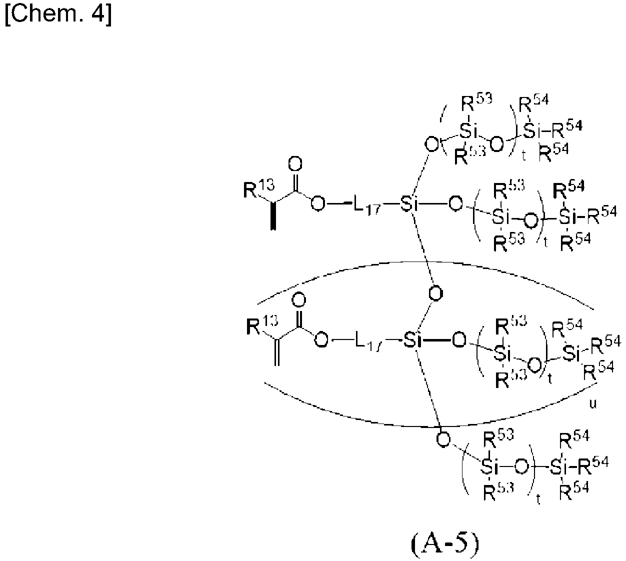 (In General Formula (A-5),
   R¹³ is each independently a hydrogen atom or a methyl group,
   R⁵³ is each independently an alkyl group having from 1 to 6 carbon atoms,
   R⁵⁴ is each independently an alkyl group having from 1 to 6 carbon atoms,
   L₁₇ is each independently a divalent organic group optionally having an ether bond,
   t is a repeating unit and is each independently an integer of from 1 to 100, and u is a repeating unit and is an integer of from 1 to 10)
[6] An anti-foaming agent containing a polymer including, as at least a polymerization component, a polymerizable monomer (Aʺʺ) which is a compound represented by the following General Formula (A-6). 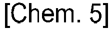 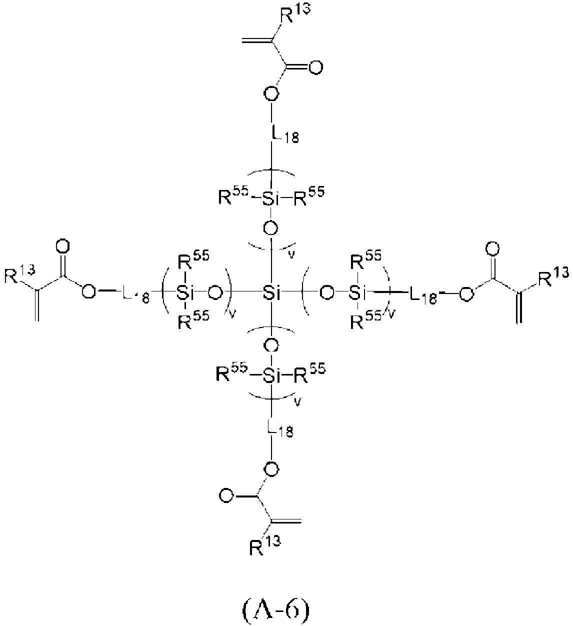 (In General Formula (A-6),
   R¹³ is each independently a hydrogen atom or a methyl group,
   R⁵⁵ is each independently an alkyl group having from 1 to 6 carbon atoms,
   L₁₈ is each independently a divalent organic group optionally having an ether bond, and
   v is a repeating unit and is each independently an integer of from 1 to 100)
[7] The anti-foaming agent according to any one of [1] to [6], wherein a content of the polymerizable monomer (A), the polymerizable monomer (A'), the polymerizable monomer (A"), the polymerizable monomer (A‴), and the polymerizable monomer (A"") in the polymerization component is in a range of from 5 to 75 mass%.
[8] The anti-foaming agent according to any one of [1] to [7], wherein the polymerization component includes one or more selected from an alkyl group having from 1 to 18 carbon atoms, an aromatic group having from 6 to 18 carbon atoms, a group containing a polyoxyalkylene chain, and a group containing a polyester chain and further includes a polymerizable monomer (B) having one polymerizable unsaturated group.
[9] The anti-foaming agent according to [8], wherein the polymerizable monomer (B) is one or more selected from the group consisting of compounds represented by the following (B-1) to (B-10). 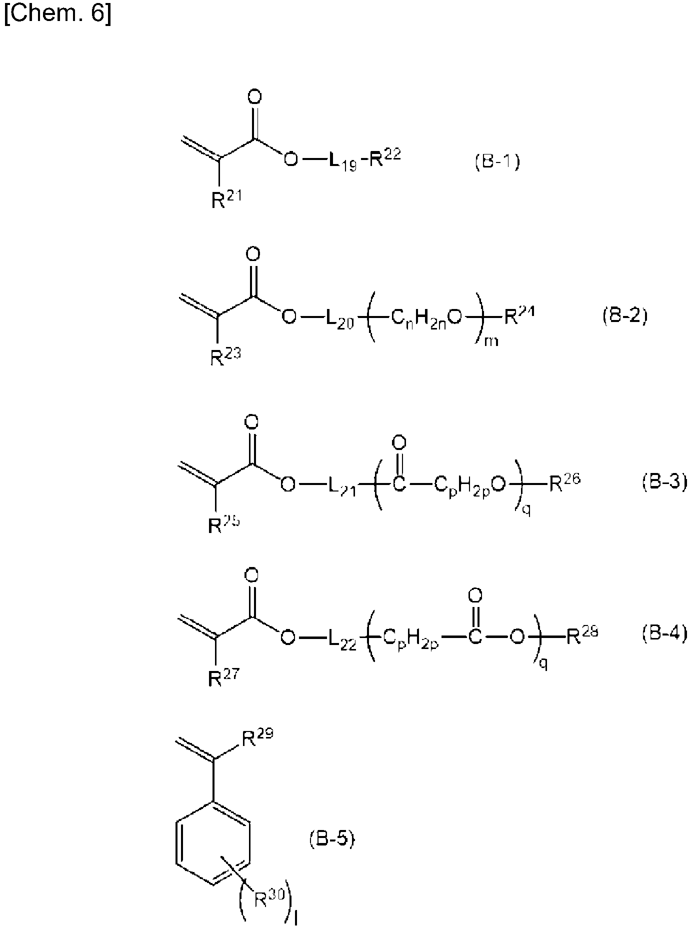 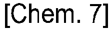 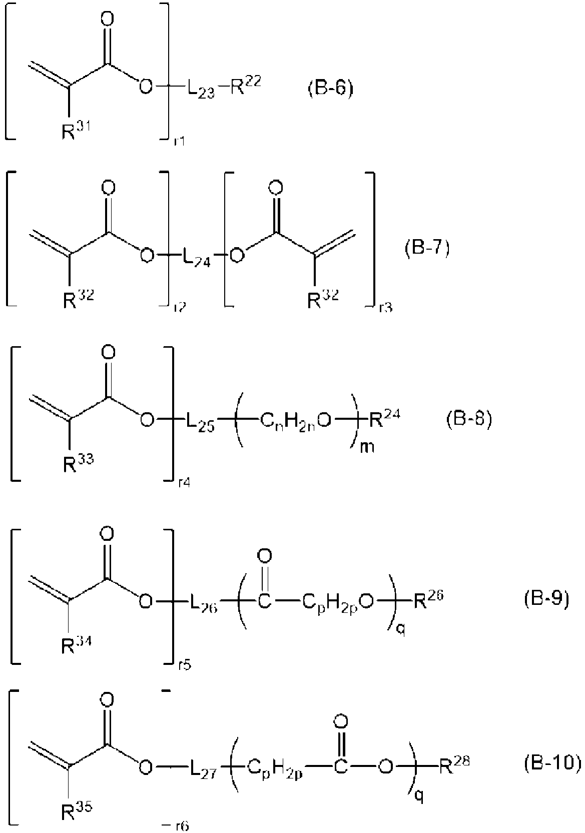 (In General Formulas (B-1), (B-2), (B-3), (B-4), (B-5), (B-6), (B-7), (B-8), (B-9), and (B-10),
   R²¹ is a hydrogen atom or a methyl group,
   R²² is an alkyl group having from 1 to 18 carbon atoms,
   R²³ is a hydrogen atom or a methyl group,
   R²⁴ is a hydrogen atom or an alkyl group having from 1 to 18 carbon atoms,
   R²⁵ is a hydrogen atom or a methyl group,
   R²⁶ is a hydrogen atom, an alkyl group having from 1 to 18 carbon atoms, or
   an alkyl group having from 1 to 18 carbon atoms and having an ether bond,
   R²⁷ is a hydrogen atom or a methyl group,
   R²⁸ is a hydrogen atom, an alkyl group having from 1 to 18 carbon atoms, or
   an alkyl group having from 1 to 18 carbon atoms and having an ether bond,
   R²⁹ is a hydrogen atom or a methyl group,
   R³⁰ is each independently an alkyl group having from 1 to 6 carbon atoms or
   an alkoxy group having from 1 to 6 carbon atoms,
   R³¹ to R³⁵ are each independently a hydrogen atom or a methyl group,
   L₁₉ and L₂₀ are each independently a single bond or a divalent organic group optionally having an ether bond,
   L₂₁ and L₂₂ are each independently a single bond or a divalent organic group optionally having an ether bond,
   L₂₃ is a single bond or an organic group optionally having an (r1 + 1)-valent ether bond,
   L₂₄ is an organic group optionally having an (r2 + r3)-valent ether bond and/or an ester bond,
   L₂₅ is an organic group optionally having an (r4 + 1)-valent ether bond,
   L₂₆ is a single bond or an organic group optionally having an (r5 + 1)-valent ether bond,
   L₂₇ is a single bond or an organic group or optionally having an (r6 + 1)-valent ether bond,
   m represents a number of repetitions, a number average value of m is in a range of from 1 to 200, p is an integer in a range of from 1 to 10, q represents a number of repetitions, a number average value of q is in a range of from 1 to 100, I is an integer in a range of from 0 to 5, r2 and r3 represent numbers of repetitions and are integers in a range of from 1 to 3, and r1, r4, r5, and r6 represent numbers of repetitions and are 2 or 3)
[10] The anti-foaming agent according to [9], wherein the polymerizable monomer (B) contains the compound represented by General Formulas (B-2), (B-7), and (B-8).
[11] The anti-foaming agent according to any one of [8] to [10], wherein a content of the polymerizable monomer (B) in the polymerization component is in a range of from 5 to 75 mass%.
[12] The anti-foaming agent according to any one of [1] to [11], wherein the polymerization component further includes a polymerizable monomer (C) having two or more polymerizable unsaturated groups other than the polymerizable monomer (A), the polymerizable monomer (A'), the polymerizable monomer (A"), the polymerizable monomer (A‴), and the polymerizable monomer (A"").
[13] The anti-foaming agent according to [11], wherein the polymerizable monomer (C) is a compound represented by the following General Formula (C-1). 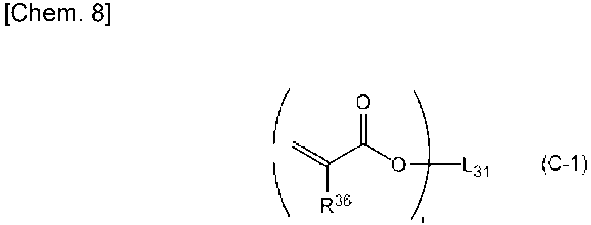 (In General Formula (C-1),
   R³⁶ is a hydrogen atom or a methyl group,
   r is an integer of 2 or more, and
   L₃₁ is an organic group optionally having an r-valent ether bond)
[14] The anti-foaming agent according to [12] or [13], wherein a content of the polymerizable monomer (C) in the polymerization component is in a range of from 5 to 70 mass%.
[15] The anti-foaming agent according to any one of [1] to [14], wherein a weight average molecular weight of the polymer is in a range of from 2000 to 200000.
[16] The anti-foaming agent according to [1], including a polymerizable monomer (D) which is the polymerizable monomer (A) having one polymerizable unsaturated group.
[17] The anti-foaming agent according to [16], wherein the polymerizable monomer (D) is a compound represented by the following General Formula (D-1). 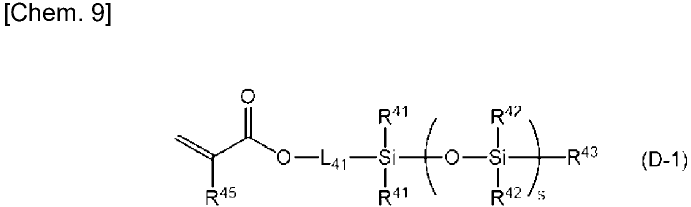 (In General Formula (D-1),
   R⁴¹ is each independently an alkyl group having from 1 to 6 carbon atoms or a group represented by -OSi(R⁴⁴)₃ (R⁴⁴ is each independently an alkyl group having from 1 to 3 carbon atoms),
   R⁴² is each independently an alkyl group having from 1 to 6 carbon atoms,
   R⁴³ is an alkyl group having from 1 to 12 carbon atoms,
   R⁴⁵ is a hydrogen atom or a methyl group,
   L₄₁ is a divalent organic group optionally having an ether bond, and
   s represents a number of repetitions)
[18] A lubricating oil composition containing a lubricating base oil and the anti-foaming agent according to any one of [1] to [17].
[19] The lubricating oil composition according to [18], which is used in a machine including an internal combustion engine or an electric motor for lubricating a drive unit of the machine.
[20] The lubricating oil composition according to [18], which is used in an automobile including an internal combustion engine or an electric motor for lubricating a drive unit of the automobile.
[21] A machine using the lubricating oil composition according to any one of [18] to [20] in a drive unit.

### ADVANTAGEOUS EFFECTS OF INVENTION

According to the present invention, it is possible to provide an anti-foaming agent exhibiting excellent anti-foaming properties even in a high-temperature environment.
According to the present invention, it is possible to provide a lubricating oil composition capable of exhibiting excellent lubricating performance even in a high-temperature environment.

### DESCRIPTION OF EMBODIMENTS

Hereinafter, an embodiment of the present invention will be described. The present invention is not limited by the following embodiment, and modifications can be appropriately applied in a range that does not impair the effect of the present invention.
The compound in the present specification may be derived from fossil resources or may be derived from biological resources.
Moreover, as used herein, the term "(meth)acrylate" refers to one or both of acrylate and methacrylate.

### [Anti-foaming agent]

An anti-foaming agent of the present invention has a polysiloxane structure represented by -[OSi(R)₂]ₓ- (R is each independently an alkyl group having from 1 to 6 carbon atoms, and x is the number of repetitions), having a functional group represented by a polymerizable monomer (a1) having two or more polymerizable unsaturated groups and/or -Si[OSi(R)₃]ₙ [R']₃₋ₙ (n is an integer of from 1 to 3, R is each independently an alkyl group having from 1 to 6 carbon atoms, R' is each independently an alkyl group having from 1 to 6 carbon atoms), and contains a polymer including a polymerizable monomer (A), which is a polymerizable monomer (a2) having two or more polymerizable unsaturated groups, as at least a polymerization component.

The term "polymerization components" as used herein means components constituting a polymer, and does not include a solvent, a polymerization initiator, and the like that do not constitute a polymer.

In the present invention, the term "polymerizable monomer" means a compound having a polymerizable unsaturated group, and examples of the polymerizable unsaturated group included in the polymerizable monomer (A) include a (meth)acryloyl group, a (meth)acryloyloxy group, a (meth)acryloylamide group, a vinyl ether group, an allyl group, a styryl group, a (meth)acryloylamino group, and a maleimide group.

The polymer including the polymerizable monomer (A), contained in the anti-foaming agent of the present invention, as at least a polymerization component may be referred to as "the polymer according to the present invention".
Hereinafter, each of the components constituting the polymer according to the present invention will be described.

The polysiloxane structure represented by -[OSi(R)₂]ₓ- in the polymerizable monomer (A) is preferably a polydimethylsiloxane structure. The functional group represented by -Si[OSi(R)₃]ₙ[R']₃₋ₙ in the polymerizable monomer (A) is preferably a functional group represented by -Si[OSi(R)₃]₃, and more preferably -Si[OSi(CH₃)₃]₃.

The polymerizable monomer (A) is preferably a compound represented by the following General Formula (A-1) and/or a compound represented by the following General Formula (A-2). 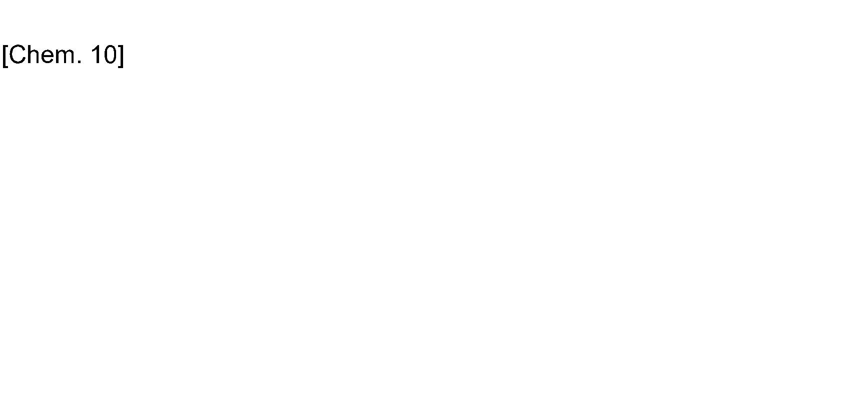 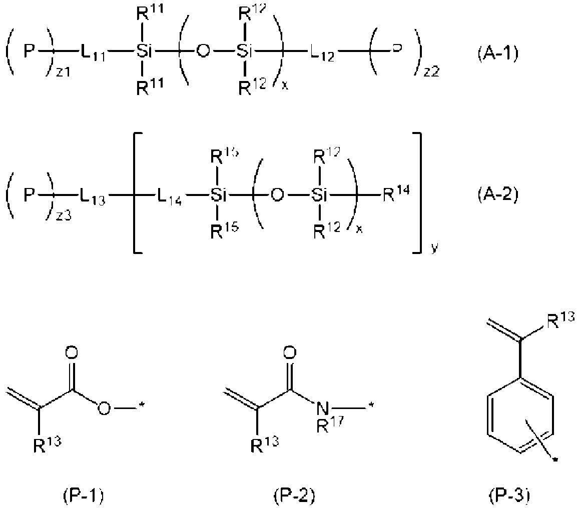 (In General Formula (A-1) and General Formula (A-2),
R¹¹ is each independently an alkyl group having from 1 to 6 carbon atoms,
R¹² is each independently an alkyl group having from 1 to 6 carbon atoms,
R¹³ is each independently a hydrogen atom or a methyl group,
R¹⁴ is an alkyl group having from 1 to 12 carbon atoms,
R¹⁵ is each independently an alkyl group having from 1 to 6 carbon atoms or a group represented by -OSi(R¹⁶)₃ (R¹⁶ is each independently an alkyl group having from 1 to 6 carbon atoms),
x represents the number of repetitions,
y is an integer of 1 or more,
z1 and z2 are each independently an integer of 1 or more,
z3 is an integer of 2 or more,
L₁₁ is an organic group optionally having a z1 + monovalent ether bond,
L₁₂ is an organic group optionally having a z2 + monovalent ether bond,
L₁₃ is an organic group optionally having a z3 + y-valent ether bond, and
L₁₄ is a divalent organic group optionally having an ether bond.
P is a polymerizable group represented by General Formula (P-1), a polymerizable group represented by General Formula (P-2), or a polymerizable group represented by General Formula (P-3).
In General Formulas (P-1), (P-2), and (P-3),
R¹³ is a hydrogen atom or a methyl group,
R¹⁷ is a hydrogen atom or an organic group, and
* is a bond that binds to L₁₁ or L₁₄)

The polymerizable monomer (A) is more preferably a compound represented by General Formula (A-1) and/or a compound represented by General Formula (A-2), in which P is a polymerizable group represented by General Formula (P-1), and is represented by the following General Formula.

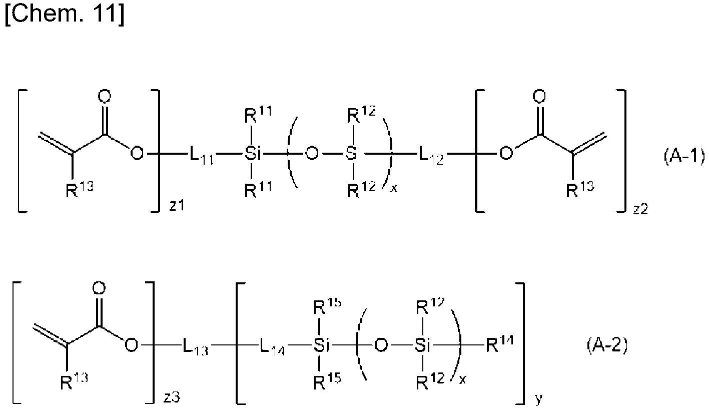

The alkyl group having from 1 to 6 carbon atoms in R¹¹, R¹², R¹⁵, and R¹⁶ is preferably an alkyl group having from 1 to 3 carbon atoms, and more preferably a methyl group.
The alkyl group having from 1 to 12 carbon atoms in R¹⁴ is preferably an alkyl group having from 1 to 8 carbon atoms, and more preferably an alkyl group having from 1 to 4 carbon atoms.

Examples of the organic group of R¹⁷ include an alkyl group having from 1 to 18 carbon atoms.

Examples of the alkylene group having from 1 to 18 carbon atoms in R¹⁷ include a methyl group, an ethyl group, an n-propyl group, an n-butyl group, an n-pentyl group, an n-hexyl group, an n-heptyl group, an n-octyl group, an n-nonyl group, an n-decyl group, an n-dodecyl group, an isopropyl group, a 2-methylpropyl group, a 2-methylhexyl group, and a tetramethylethyl group.

The number of repeating x may be, for example, an integer of 1 or more. The number average of x is, for example, in a range of from 1 to 150, preferably in a range of from 1 to 75, more preferably in a range of from 1 to 50, and still more preferably in a range of from 1 to 20.
The number average value for x can be confirmed by measuring a number average molecular weight of the polymerizable monomer (A) by a method described in Examples.

z1 is an integer of 1 or more, preferably an integer in a range of from 1 to 4, more preferably an integer of 1 or 2, and still more preferably 1.

Regarding the organic group optionally having the z1 + monovalent ether bond of L₁₁, for example, when L₁₁ is a divalent organic group (z1 = 1), the divalent organic group is preferably an alkylene group having from 1 to 50 carbon atoms or an alkyleneoxy group having from 1 to 50 carbon atoms.

Examples of the alkylene group having from 1 to 50 carbon atoms in L₁₁ include a methylene group, an ethylene group, an n-propylene group, an n-butylene group, an n-pentylene group, an n-hexylene group, an n-heptylene group, an n-octylene group, an n-nonylene group, an n-decylene group, an n-dodecylene group, an isopropylene group, a 2-methylpropylene group, a 2-methylhexylene group, and a tetramethylethylene group.

The alkylene group having from 1 to 50 carbon atoms in L₁₁ is preferably an alkylene group having from 1 to 15 carbon atoms, more preferably an alkylene group having from 1 to 5 carbon atoms, and still more preferably a methylene group, an ethylene group, an n-propylene group, or an isopropylene group.

The alkyleneoxy group having from 1 to 50 carbon atoms in L₁₁ is, for example, a group in which one or more -CH₂- in the alkylene group are substituted with -O-.
The alkyleneoxy group having from 1 to 50 carbon atoms in L₁₁ is preferably an alkyleneoxy group having from 1 to 15 carbon atoms, more preferably an alkyleneoxy group having from 1 to 8 carbon atoms, and still more preferably a methyleneoxy group, an ethyleneoxy group, a propyleneoxy group, a propyleneoxyethylene group, an oxytrimethylene group, a butyleneoxy group, an oxytetramethylene group, a pentyleneoxy group, a heptyleneoxy group or an octyleneoxy group.

When the divalent organic group of L₁₁ is an alkylene group having from 1 to 50 carbon atoms or an alkyleneoxy group having from 1 to 50 carbon atoms, in these divalent organic groups, some -CH₂- may be replaced with a carbonyl group (-C(=O)-), a phenylene group, an amide bond, a sulfide bond (-S-), or a urethane bond (-NHC(=O)-).

When the divalent organic group of L₁₁ is an alkylene group having from 1 to 50 carbon atoms or an alkyleneoxy group having from 1 to 50 carbon atoms, a substituent such as a hydroxyl group may be substituted on a carbon atom of these groups.

When the z1 + monovalent organic group of L₁₁ is a trivalent or higher valent organic group, the trivalent or higher valent organic group is, for example, an organic group in which a hydrogen atom bonded to a carbon atom of the divalent organic group described above is replaced with a bond to have a corresponding valence.

z2 is an integer of 1 or more, preferably an integer in a range of from 1 to 4, more preferably an integer of 1 or 2, and still more preferably 1.

The z2 + monovalent organic group of L₁₂ is the same as the z1 + monovalent organic group of L₁₁.

y is an integer of 1 or more, preferably an integer in a range of from 1 to 4, more preferably an integer in a range of from 1 to 3, and still more preferably 1 or 2.

z3 is an integer of 2 or more, preferably an integer in a range of from 2 to 6, more preferably an integer of 2 or 3, and still more preferably 2.

The z3 + y-valent organic group of L₁₃ can be the same as the organic group having a valence corresponding to L₁₃ of the z1 + monovalent organic group of L₁₁. For example, when L₁₃ is a trivalent organic group, the trivalent organic group of L₁₃ is preferably the same as the trivalent organic group of L11.

The divalent organic group of L₁₄ is the same as the divalent organic group of L₁₁.

The anti-foaming agent of the present invention may contain not only the polymerizable monomer (A) described above but also a polymer including a polymerizable monomer (A'), a polymerizable monomer (A"), a polymerizable monomer (A‴), and a polymerizable monomer (A"") shown below as at least polymerization components. These aspects will be described below.

The polymerizable monomer (A') is a compound having a cyclic siloxane structure and from 3 to 6 (meth)acrylate groups branched therefrom, represented by the following General Formula (A-3). 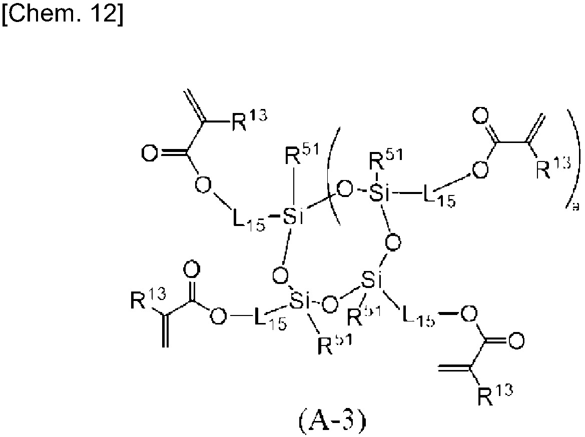 (In General Formula (A-3),
R¹³ is each independently a hydrogen atom or a methyl group,
R⁵¹ is each independently an alkyl group having from 1 to 6 carbon atoms,
L₁₅ is a divalent organic group optionally having an ether bond, and
a is a repeating unit and is an integer of from 0 to 3)

R⁵¹ is preferably an alkyl group having from 1 to 3 carbon atoms, and more preferably a methyl group. a is preferably 1 or 2, more preferably 1. When a is 0, adjacent Si and O are bonded to each other to form a cyclic siloxane compound having three (meth)acrylate groups. As a increases to 2 or 3, -Si-O- of the cyclic siloxane structure also increases, a compound having five (meth)acrylate groups is obtained when a is 2, and a compound having six (meth)acrylate groups is obtained when a is 3.

The divalent organic group of L₁₅ is the same as L₁₁ described above, and is preferably an alkylene group having from 1 to 50 carbon atoms, or an alkyleneoxy group having from 1 to 50 carbon atoms.

Specific examples of the compound represented by General Formula (A-3) include compounds represented by the following Formulas (A-3-1), (A-3-2), (A-3-3), (A-3-4), (A-3-5), and (A-3-6).

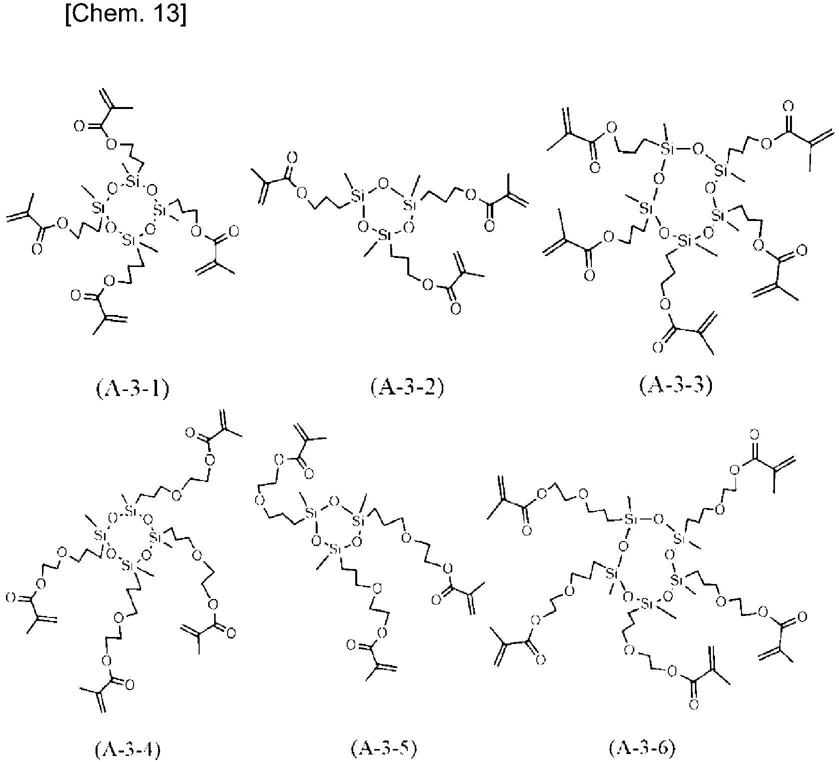

The polymerizable monomer (A") is a linear siloxane compound having (meth)acrylate groups at both ends, represented by the following General Formula (A-4). 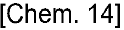 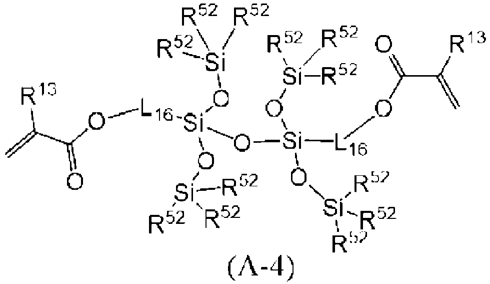 (In General Formula (A-4),
R¹³ is each independently a hydrogen atom or a methyl group,
R⁵² is each independently an alkyl group having from 1 to 6 carbon atoms, and
L₁₆ is each independently a divalent organic group optionally having an ether bond)

R⁵² is preferably an alkyl group having from 1 to 3 carbon atoms, and more preferably a methyl group. L₁₆ in General Formula (A-4) is the same as L₁₅ in General Formula (A-3), and is preferably an alkylene group having from 1 to 50 carbon atoms or an alkyleneoxy group having from 1 to 50 carbon atoms.

Specific examples of the compound represented by General Formula (A-4) include compounds represented by the following Formulas (A-4-1) and (A-4-2).

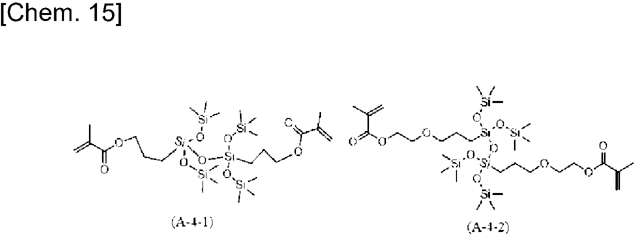

The polymerizable monomer (A‴) is a compound represented by the following General Formula (A-5) and having one or more (meth)acrylate groups and a branched siloxane structure. 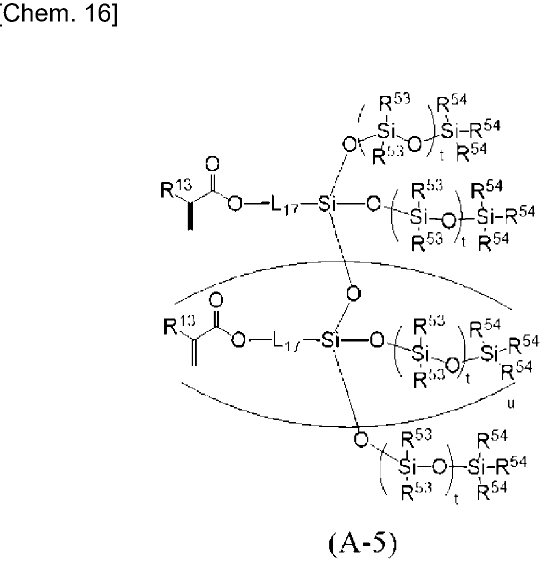 (In General Formula (A-5),
R¹³ is each independently a hydrogen atom or a methyl group,
R⁵³ is each independently an alkyl group having from 1 to 6 carbon atoms,
R⁵⁴ is each independently an alkyl group having from 1 to 6 carbon atoms,
L₁₇ is each independently a divalent organic group optionally having an ether bond,
t is a repeating unit and is each independently an integer of from 1 to 100, and
u is a repeating unit and is an integer of from 1 to 10)

R⁵³ and R⁵⁴ are preferably an alkyl group having from 1 to 3 carbon atoms, and more preferably a methyl group. The number average of t is, for example, in a range of from 0 to 150, preferably in a range of from 0 to 75, more preferably in a range of from 0 to 50, and still more preferably in a range of from 0 to 20. u is preferably from 1 to 4, more preferably from 1 to 2. L₁₇ in General Formula (A-5) is the same as L₁₅ in General Formula (A-3), and is preferably an alkylene group having from 1 to 50 carbon atoms or an alkyleneoxy group having from 1 to 50 carbon atoms.

Specific examples of the compound represented by General Formula (A-5) include compounds represented by Formulas (A7), (A8), and (A9) described in Synthesis Example 7 described below and the following Formulas (A7'), (A8'), and (A9') (t1, t2, and t3 in the formula are each independently an integer of from 0 to 7).

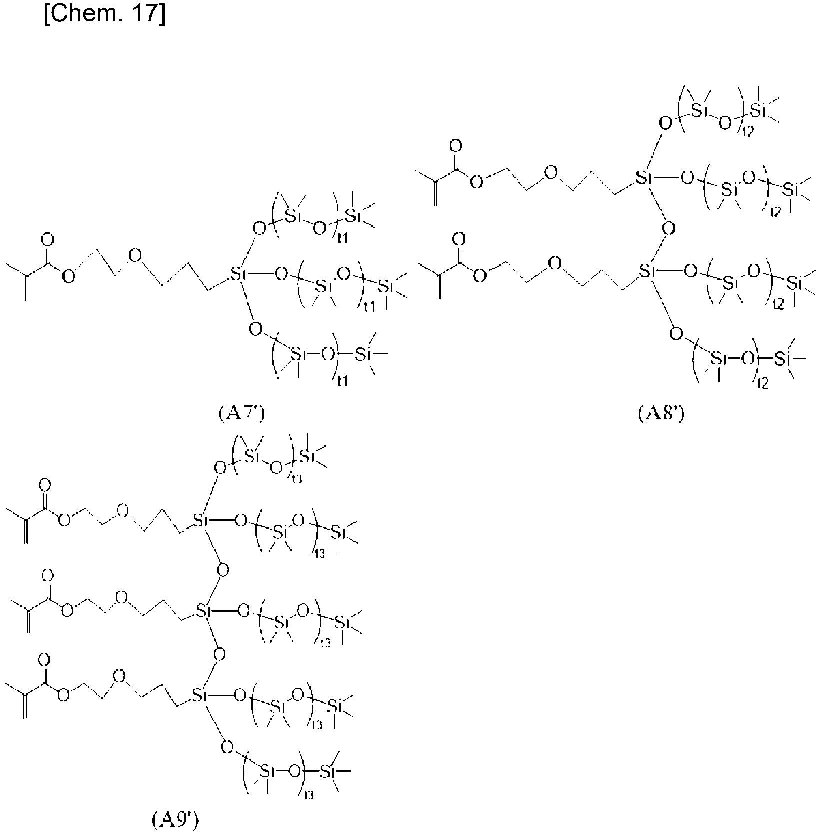

The polymerizable monomer (A"") is a compound represented by the following General Formula (A-6). 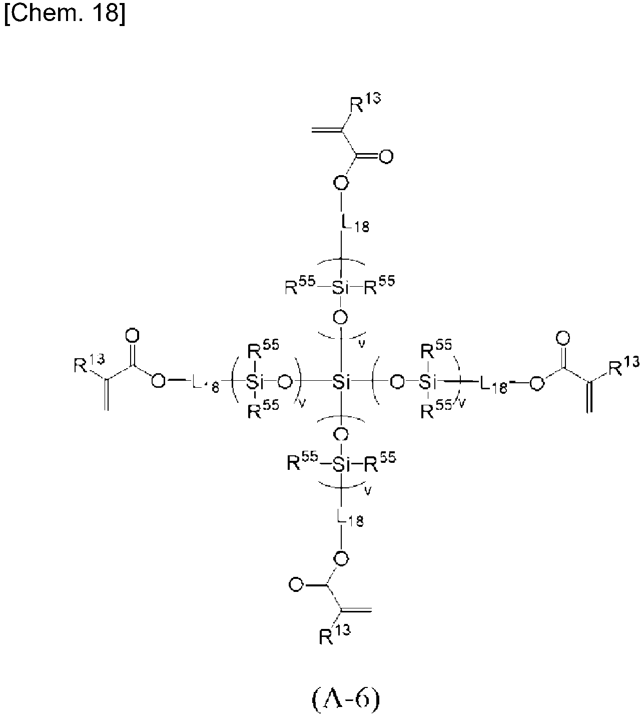 (In General Formula (A-6),
R¹³ is each independently a hydrogen atom or a methyl group,
R⁵⁵ is each independently an alkyl group having from 1 to 6 carbon atoms,
L₁₈ is each independently a divalent organic group optionally having an ether bond, and
v is a repeating unit and is each independently an integer of from 1 to 100)

R⁵⁵ is preferably an alkyl group having from 1 to 3 carbon atoms, and more preferably a methyl group. The number average of v is, for example, in a range of from 1 to 150, preferably in a range of from 1 to 75, more preferably in a range of from 1 to 50, and still more preferably in a range of from 1 to 20. L₁₈ in General Formula (A-6) is the same as L₁₅ in General Formula (A-3), and is preferably an alkylene group having from 1 to 50 carbon atoms or an alkyleneoxy group having from 1 to 50 carbon atoms.

Specific examples of the compound represented by General Formula (A-6) include compounds represented by Formula (A10) described in Synthesis Example 8 described later and the following Formula (A10').

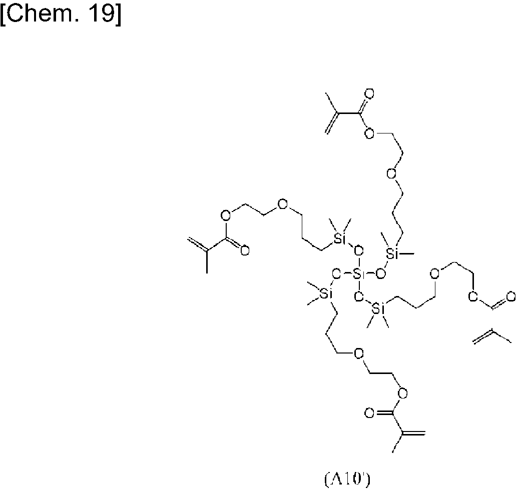

The polymerizable monomer (A) can be produced by a known method, and for example, the polymerizable monomer (A) can be produced by reacting a compound having an isocyanate group and a polymerizable unsaturated group with a compound having a linking group represented by -[OSi(R)₂]ₓ- and/or a functional group represented by -Si [OSi(R)₃]ₙ [R']₃₋ₙ and two or more hydroxyl groups.
In addition to the above, the polymerizable monomer (A) can also be produced, for example, by reacting a compound having a linking group represented by - [OSi(R)₂]ₓ- and/or a functional group represented by -Si [OSi(R)₃]ₙ [R']₃₋ₙ and a polymerizable unsaturated group with an alcohol having a mercapto group to produce a precursor, and reacting the precursor with a compound having an isocyanate group and two or more polymerizable unsaturated groups. The polymerizable monomer (A'), the polymerizable monomer (A"), the polymerizable monomer (A‴), and the polymerizable monomer (Aʺʺ) can also be produced in the same manner as the polymerizable monomer (A).

In the polymer according to the present invention, the lower limit of the content proportion of the polymerizable monomer (A) is, relative to the total amount of the polymerization components of the polymer, for example, 3 mass% or more, 5 mass% or more, 10 mass% or more, 20 mass% or more, 25 mass% or more, or 30 mass% or more.
The upper limit of the content proportion of the polymerizable monomer (A) is, relative to the total amount of the polymerization components of the polymer, for example, 90 mass% or less, 80 mass% or less, 75 mass% or less, 70 mass% or less, or 60 mass% or less.
Examples of the combination of the upper limit and the lower limit of the content proportion of the polymerizable monomer (A) include a range of from 3 mass% to 90 mass% of the total amount of the polymerization components of the polymer, preferably a range of from 5 mass% to 75 mass% of the total amount of the polymerization components of the polymer, and more preferably a range of from 30 mass% to 70 mass%.
The content proportion of the polymerizable monomer (A) can be adjusted based on the feed ratio of raw materials of the polymerizable monomer (A) in producing the polymer according to the present invention. The polymerizable monomer (A'), the polymerizable monomer (A"), the polymerizable monomer (A‴), and the polymerizable monomer (Aʺʺ) also have the same ratio as the polymerizable monomer (A).

The polymerization component of the polymer according to the present invention preferably has one or more selected from the group consisting of an alkyl group having from 1 to 18 carbon atoms, an aromatic group having from 6 to 18 carbon atoms, a group containing a polyoxyalkylene chain, and a group containing a polyester chain and further includes a polymerizable monomer (B) having one polymerizable unsaturated group.
By further including the polymerizable monomer (B) as a polymerization component, when the anti-foaming agent of the present invention is added to a lubricating oil composition, high compatibility of the anti-foaming agent with the lubricating base oil can be ensured.

The alkyl group having from 1 to 18 carbon atoms included in the polymerizable monomer (B) may be any of a linear alkyl group, a branched alkyl group, or a cyclic alkyl group, and specific examples thereof include a methyl group, an ethyl group, a normal propyl group, an isopropyl group, an n-butyl group, a t-butyl group, an n-hexyl group, a cyclohexyl group, an n-octyl group, and a hexadecyl group.
The alkyl group having from 1 to 18 carbon atoms included in the polymerizable monomer (B) is preferably an alkyl group having from 1 to 6 carbon atoms.

Examples of the aromatic group having from 6 to 18 carbon atoms included in the polymerizable monomer (B) include a phenyl group, a naphthyl group, an anthracene-1-yl group, and a phenanthrene-1-yl group.

The group containing a (poly)oxyalkylene chain included in the polymerizable monomer (B) is a monovalent group containing a repeating moiety of oxyalkylene or a divalent linking group containing a repeating moiety of oxyalkylene.

The group containing a polyester chain included in the polymerizable monomer (B) is a monovalent group containing a repeating moiety of ester bonding or a divalent linking group containing a repeating moiety of ester bonding.

The alkyl group having from 1 to 18 carbon atoms included in the polymerizable monomer (B) may further contain a substituent, and examples of the substituent include a hydroxyl group and an aryl group.
The aromatic group having from 6 to 18 carbon atoms included in the polymerizable monomer (B) may further contain a substituent, and examples of the substituent include a hydroxyl group and an alkyl group.

Examples of the polymerizable monomer (B) that includes an alkyl group having from 1 to 18 carbon atoms and whose polymerizable unsaturated group is a (meth)acryloyl group include: alkyl esters having from 1 to 18 carbon atoms of (meth)acrylic acid, such as methyl (meth)acrylate, ethyl (meth)acrylate, n-propyl (meth)acrylate, isopropyl (meth)acrylate, n-butyl (meth)acrylate, s-butyl (meth)acrylate, isobutyl (meth)acrylate, t-butyl (meth)acrylate, n-pentyl (meth)acrylate, n-hexyl (meth)acrylate, n-heptyl (meth)acrylate, n-octyl (meth)acrylate, 2-ethylhexyl (meth)acrylate, decyl (meth)acrylate, dodecyl (meth)acrylate, stearyl (meth)acrylate, and isostearyl (meth)acrylate; and bridged cyclic alkyl esters having from 1 to 18 carbon atoms of (meth)acrylic acid, such as dicyclopentanyloxylethyl (meth)acrylate, isobornyloxylethyl (meth)acrylate, isobornyl (meth)acrylate, adamantyl (meth)acrylate, dimethyladamantyl (meth)acrylate, dicyclopentanyl (meth)acrylate, and dicyclopentenyl (meth)acrylate.
Note that, in the present application, the term "(meth)acrylate" refers to both of methacrylate and acrylate.

Examples of the polymerizable monomer (B) that includes a phenylalkyl group having from 7 to 18 carbon atoms or a phenoxyalkyl group having from 7 to 18 carbon atoms and whose polymerizable unsaturated group is a (meth)acryloyl group include benzyl (meth)acrylate, phenoxymethyl (meth)acrylate, and 2-phenoxyethyl (meth)acrylate.

Examples of the polymerizable monomer (B) that has an alkyl group having from 1 to 18 carbon atoms and whose polymerizable unsaturated group is a vinyl ether group include: alkyl vinyl ethers such as methyl vinyl ether, ethyl vinyl ether, n-propyl vinyl ether, isopropyl vinyl ether, n-butyl vinyl ether, isobutyl vinyl ether, tert-butyl vinyl ether, n-pentyl vinyl ether, n-hexyl vinyl ether, n-octyl vinyl ether, n-dodecyl vinyl ether, 2-ethylhexyl vinyl ether, and cyclohexyl vinyl ether; and cycloalkyl vinyl ether.

Examples of the polymerizable monomer (B) including an aromatic group having from 6 to 18 carbon atoms include styrene, α-methylstyrene, p-methylstyrene, and p-methoxystyrene.

Examples of the polymerizable monomer (B) that has an alkyl group having from 1 to 18 carbon atoms and whose polymerizable unsaturated group is a (meth)acryloylamino group include N,N-dimethylacrylamide, N,N-diethylacrylamide, N-isopropylacrylamide, diacetone acrylamide, and acryloyl morpholine.

Examples of the polymerizable monomer (B) that includes an alkyl group having from 1 to 18 carbon atoms and whose polymerizable unsaturated group is a maleimide group include methylmaleimide, ethylmaleimide, propylmaleimide, butylmaleimide, hexylmaleimide, octylmaleimide, dodecylmaleimide, stearylmaleimide, and cyclohexylmaleimide.

Examples of the polymerizable monomer (B) that has a group including a polyoxyalkylene chain and whose polymerizable unsaturated group is a (meth)acryloyl group include polypropylene glycol mono(meth)acrylate, polyethylene glycol mono(meth)acrylate, polytrimethylene glycol mono(meth)acrylate, polytetramethylene glycol mono(meth)acrylate, poly(ethylene glycol/propylene glycol) mono(meth)acrylate, polyethylene glycol/polypropylene glycol mono(meth)acrylate, poly(ethylene glycol/tetramethylene glycol) mono(meth)acrylate, polyethylene glycol/polytetramethylene glycol mono(meth)acrylate, poly(propylene glycol/tetramethylene glycol) mono(meth)acrylate, polypropylene glycol/polytetramethylene glycol mono(meth)acrylate, poly(propylene glycol/1,2-butylene glycol) mono(meth)acrylate, polypropylene glycol/poly(1,2-butylene glycol) mono(meth)acrylate, poly(ethylene glycol/1,2-butylene glycol) mono(meth)acrylate, polyethylene glycol/poly(1,2-butylene glycol) mono(meth)acrylate, poly(tetraethylene glycol/1,2-butylene glycol) mono(meth)acrylate, polytetraethylene glycol/poly(1,2-butylene glycol) mono(meth)acrylate, poly(1,2-butylene glycol) mono(meth)acrylate, poly(ethylene glycol/trimethylene glycol) mono(meth)acrylate, polyethylene glycol/polytrimethylene glycol mono(meth)acrylate, poly(propylene glycol/trimethylene glycol) mono(meth)acrylate, polypropylene glycol/polytrimethylene glycol mono(meth)acrylate, poly(trimethylene glycol/tetramethylene glycol) mono(meth)acrylate, polytrimethylene glycol/polytetramethylene glycol mono(meth)acrylate, poly(1,2-butylene glycol/trimethylene glycol) mono(meth)acrylate, poly(1,2-butylene glycol/polytrimethylene glycol) mono(meth)acrylate, 2-hydroxyethyl (meth)acrylate, 2-hydroxypropyl (meth)acrylate, 2-hydroxybutyl (meth)acrylate, 4-hydroxybutyl (meth)acrylate, poly(1,2-butylene glycol/tetramethylene glycol) mono(meth)acrylate, and poly(1,2-butylene glycol/polytetramethylene glycol) mono(meth)acrylate.
Note that, the term "poly(ethylene glycol/propylene glycol)" means a random copolymer of ethylene glycol and propylene glycol, and the term "polyethylene glycol/polypropylene glycol" means a block copolymer of ethylene glycol and propylene glycol.

The polymerizable monomer (B) is preferably at least one or more selected from the group consisting of a compound represented by the following General Formula (B-1), a compound represented by the following General Formula (B-2), a compound represented by the following General Formula (B-3), a compound represented by the following general formula (B-4), a compound represented by the following General Formula (B-5), a compound represented by the following General Formula (B-6), a compound represented by the following General Formula (B-7), a compound represented by the following General Formula (B-8), a compound represented by the following General Formula (B-9), and a compound represented by the following General Formula (B-10). 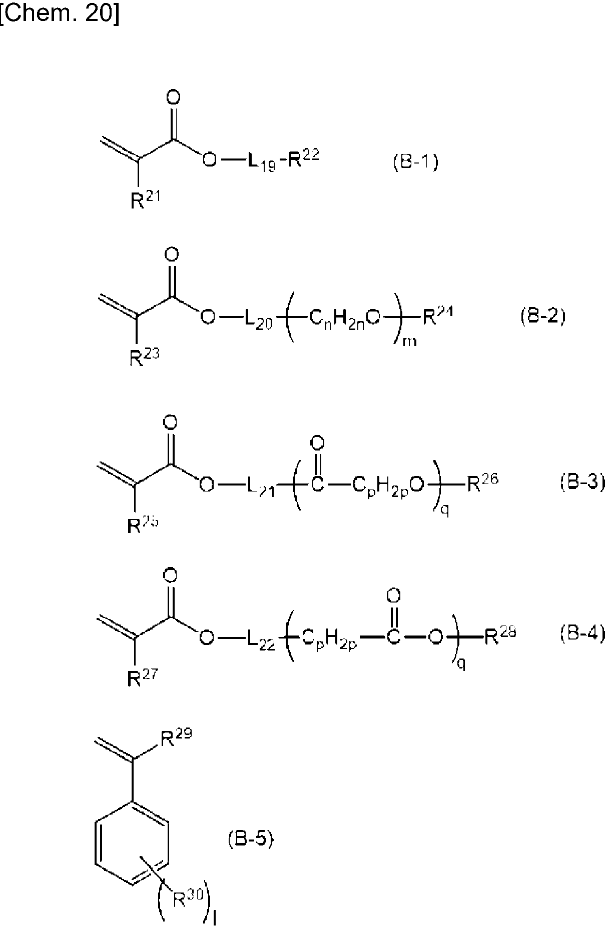 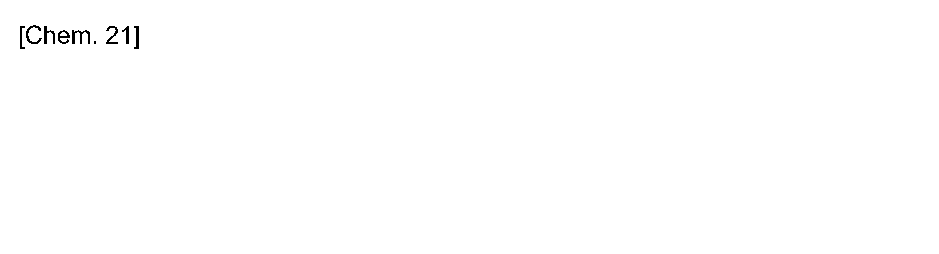 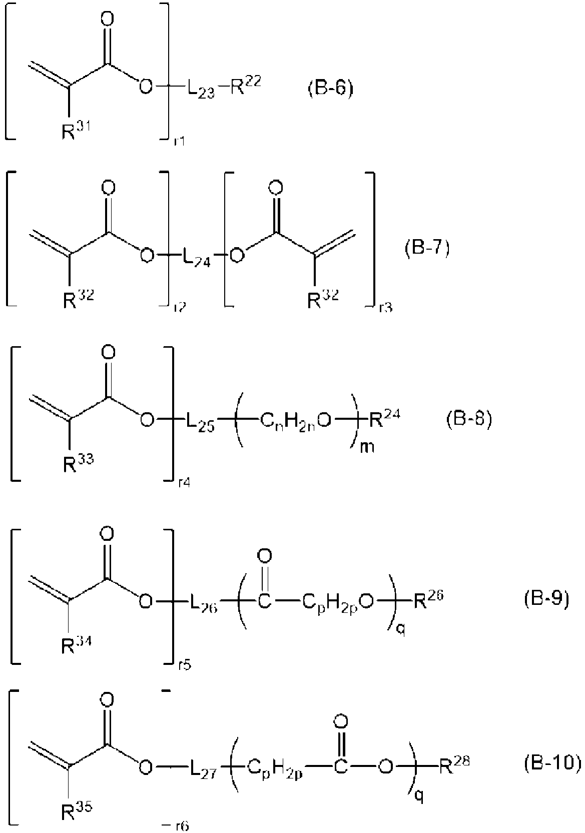 (In General Formulas (B-1), (B-2), (B-3), (B-4), (B-5), (B-6), (B-7), (B-8), (B-9), and (B-10),
R²¹ is a hydrogen atom or a methyl group,
R²² is an alkyl group having from 1 to 18 carbon atoms,
R²³ is a hydrogen atom or a methyl group,
R²⁴ is a hydrogen atom or an alkyl group having from 1 to 18 carbon atoms,
R²⁵ is a hydrogen atom or a methyl group,
R²⁶ is a hydrogen atom, an alkyl group having from 1 to 18 carbon atoms, or an alkyl group having from 1 to 18 carbon atoms and having an ether bond,
R²⁷ is a hydrogen atom or a methyl group,
R²⁸ is a hydrogen atom, an alkyl group having from 1 to 18 carbon atoms, or
an alkyl group having from 1 to 18 carbon atoms and having an ether bond,
R²⁹ is a hydrogen atom or a methyl group,
R³⁰ is each independently an alkyl group having from 1 to 6 carbon atoms or an alkoxy group having from 1 to 6 carbon atoms,
R³¹ to R³⁵ are each independently a hydrogen atom or a methyl group,
L₁₉ and L₂₀ are each independently a single bond or a divalent organic group optionally having an ether bond,
L₂₁ and L₂₂ are each independently a single bond or a divalent organic group optionally having an ether bond,
L₂₃ is a single bond or an organic group optionally having an (r1 + 1)-valent ether bond,
L₂₄ is an organic group optionally having an (r2 + r3)-valent ether bond and/or an ester bond,
L₂₅ is an organic group optionally having an (r4 + 1)-valent ether bond,
L₂₆ is a single bond or an organic group optionally having an (r5 + 1)-valent ether bond,
L₂₇ is a single bond or an organic group optionally having an (r6 + 1)-valent ether bond,
m represents the number of repetitions, a number average value of m is in a range of from 1 to 200, p is an integer in a range of from 1 to 10, q represents the number of repetitions, the number average value of q is in a range of from 1 to 100, I is an integer in a range of from 0 to 5, r2 and r3 represent the number of repetitions and are integers in a range of from 1 to 3, and r1, r4, r5, and r6 represent the number of repetitions and are 2 or 3)

In the Formula (B-2), m instances of m inside the parentheses may be the same or different from each other.
In the Formula (B-3), q instances of p inside the parentheses may be the same or different from each other.
In the Formula (B-4), q instances of p inside the parentheses may be the same or different from each other.
In the Formula (B-8), m instances of m inside the parentheses may be the same or different from each other.
In the Formula (B-9), q instances of p inside the parentheses may be the same or different from each other.
In the Formula (B-10), q instances of p inside the parentheses may be the same or different from each other.

The alkyl group having from 1 to 18 carbon atoms of R²², R²⁴, R²⁶, and R²⁸ may further contain a substituent, and examples of the substituent include a hydroxyl group and an aryl group.
The alkyl group containing an ether bond having from 1 to 18 carbon atoms of R²⁶ and R²⁸ may further contain a substituent, and examples of the substituent include a hydroxyl group and an aryl group.
The alkyl group having from 1 to 6 carbon atoms of R³⁰ may further contain a substituent, and examples of the substituent include a hydroxyl group and an aryl group.
The alkoxy group having from 1 to 6 carbon atoms of R³⁰ may further contain a substituent, and examples of the substituent include a hydroxyl group and an aryl group.

Examples of the divalent organic group of L₁₉ to L₂₂ in Formulas (B-1) to (B-4) include those the same as the divalent organic group in a case where L₁₁ is a divalent organic group. The same applies to the divalent organic groups of L₂₃ to L₂₇ in the Formulas (B-6) to (B-10).

In General Formulas (B-2) and (B-8), m represents the number of repetitions, and, for example, m may be an integer of 1 or more. The number average of m is, for example, in a range of from 1 to 100, preferably in a range of from 2 to 30, and more preferably in a range of from 3 to 15.
The number average value for m can be confirmed by measuring a number average molecular weight of the polymerizable monomer (B) by a method described in Examples.

In General Formulas (B-3), (B-4), (B-9), and (B-10), q represents the number of repetitions and, for example, q may be an integer of 1 or more. The number average of q is, for example, in a range of from 1 to 100, preferably in a range of from 2 to 30, and more preferably in a range of from 3 to 15.

In General Formulas (B-6) to (B-10), r1 and r4 to r6 are preferably 2 or 3, and more preferably 2.
r2 and r3 are preferably 1 or 2, and more preferably 1.

The polymerizable monomer (B) preferably contains compounds represented by the Formulas (B-2), (B-7), and (B-8).

The polymerizable monomer (B) preferably contains one or more selected from the group consisting of compounds represented by the Formulas (B-2), (B-3), (B-4), (B-5), (B-6), (B-7), (B-8), (B-9), and (B-10). When one or more selected from the group consisting of the compounds represented by (B-2), (B-3), (B-4), (B-5), (B-6), (B-7), (B-8), (B-9), and (B-10) are contained as the polymerizable monomer (B), a total amount of the compounds represented by Formulas (B-2), (B-3), and (B-4) and the compounds represented by Formulas (B-7), (B-8), (B-9), and (B-10) is, for example, 1 mass% or more, preferably 5 mass% or more, and more preferably 7 mass% or more, relative to the total amount of the polymerizable monomer (B).

The polymerizable monomer (B), serving as a polymerization component, may be a single type or a combination of two or more polymerizable monomers (B) having different structures from each other.

The polymerizable monomer (B) can be produced by a known method, and a commercially available product thereof may be used.

In the polymer according to the present invention, the content proportion of the polymerizable monomer (B) is, relative to 100 parts by mass of the polymerizable monomer (A), for example, in a range of from 0.1 to 900 parts by mass, preferably in a range of from 1 to 500 parts by mass relative to 100 parts by mass of the polymerizable monomer (A), and more preferably in a range of from 5 to 300 parts by mass relative to 100 parts by mass of the polymerizable monomer (A). The percentage is more preferably in a range of from 10 to 200 parts by mass relative to 100 parts by mass of the polymerizable monomer (A). The content proportion of the polymerizable monomer (B) is the same for 100 parts by mass of the polymerizable monomer (A'), the polymerizable monomer (A"), the polymerizable monomer (A‴), and the polymerizable monomer (A"").
The content proportion of the polymerizable monomer (B) can be adjusted based on the feed ratio of raw materials of the polymerizable monomer (B) in producing the polymer according to the present invention.

In the polymer according to the present invention, the proportion of the polymerizable monomer (B) in the polymerization component is, for example, in a range of from 5 to 90 mass%, preferably from 10 to 80 mass%, more preferably from 20 to 70 mass%, and particularly preferably from 30 to 60 mass% relative to the total amount of the polymerization components of the polymer.

The polymerization component of the polymer according to the present invention preferably contains, as an optional component, a polymerizable monomer (C) having two or more polymerizable unsaturated groups other than the polymerizable monomer (A), the polymerizable monomer (A'), the polymerizable monomer (A"), the polymerizable monomer (A‴), and the polymerizable monomer (Aʺʺ).

The polymerizable monomer (C) is not particularly limited as long as it is a polymerizable monomer having two or more polymerizable unsaturated groups that do not correspond to the polymerizable monomer (A) and the polymerizable monomer (B), and is preferably a compound represented by the following General Formula (C-1). 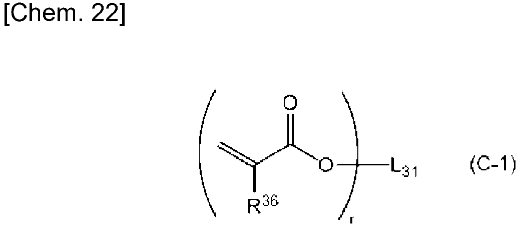 (In General Formula (C-1),
R³⁶ is a hydrogen atom or a methyl group.
r is an integer of 2 or more, and
L₃₁ is an organic group optionally having an r-valent ether bond)

r may be an integer of 2 or more, and is, for example, an integer in the range of from 2 to 12, preferably an integer in the range of from 2 to 8, more preferably an integer in the range of from 2 to 6, and even more preferably an integer in the range of from 2 to 4.

The r-valent organic group of L₃₁ is an organic group having a valence corresponding to the numerical value of r, for example, a divalent organic group when r is 2, and a hexavalent organic group when r is 6.

L₃₁ is preferably an alkylene group having from 1 to 50 carbon atoms or an alkyleneoxy group having from 1 to 50 carbon atoms, and is an organic group in which a hydrogen atom bonded to a carbon atom of the alkylene group and the alkyleneoxy group is replaced with a bond to have a valence corresponding to a numerical value of r.
Thus, when L₃₁ is a divalent organic group, L₃₁ is preferably an alkylene group having from 1 to 50 carbon atoms or an alkyleneoxy group having from 1 to 50 carbon atoms.

Examples of the alkylene group having from 1 to 50 carbon atoms in L₃₁ include a methylene group, an ethylene group, an n-propylene group, an n-butylene group, an n-pentylene group, an n-hexylene group, an n-heptylene group, an n-octylene group, an n-nonylene group, an n-decylene group, an n-dodecylene group, an isopropylene group, a 2-methylpropylene group, a 2-methylhexylene group, and a tetramethylethylene group.

The alkylene group having from 1 to 50 carbon atoms in L₃₁ is preferably an alkylene group having from 1 to 15 carbon atoms, more preferably an alkylene group having from 1 to 5 carbon atoms, and still more preferably a methylene group, an ethylene group, an n-propylene group, or an isopropylene group.

The alkyleneoxy group having from 1 to 50 carbon atoms in L₃₁ is, for example, a group in which one or more -CH₂- in the alkylene group are substituted with -O-.
The alkyleneoxy group having from 1 to 50 carbon atoms in L₃₁ is preferably an alkyleneoxy group having from 1 to 15 carbon atoms, more preferably an alkyleneoxy group having from 1 to 8 carbon atoms, and still more preferably a methyleneoxy group, an ethyleneoxy group, a propyleneoxy group, an oxytrimethylene group, a butyleneoxy group, an oxytetramethylene group, a pentyleneoxy group, a heptyleneoxy group or an octyleneoxy group.

When the divalent organic group of L₃₁ is an alkylene group having from 1 to 50 carbon atoms or an alkyleneoxy group having from 1 to 50 carbon atoms, in these divalent organic groups, some -CH₂- may be replaced with a carbonyl group (-C(=O)-), a phenylene group, a sulfide bond (-S-), an amide bond, or a urethane bond.

When the divalent organic group of L₃₁ is an alkylene group having from 1 to 50 carbon atoms or an alkyleneoxy group having from 1 to 50 carbon atoms, a substituent such as a hydroxyl group may be further substituted on a carbon atom of these groups.

Specific examples of the polymerizable monomer (C) include ethylene glycol di(meth)acrylate, propylene glycol di(meth)acrylate, butanediol di(meth)acrylate, polyethylene glycol di(meth)acrylate, 1,6-hexanediol di(meth)acrylate, 1,9-nonanediol di(meth)acrylate, 1,10-decanediol di(meth)acrylate, neopentyl glycol di(meth)acrylate, 2-hydroxy-3-methacrylpropyl acrylate, 2-hydroxy-1,3-dimethacryloxypropane, polypropylene glycol di(meth)acrylate, polytetramethylene glycol di(meth)acrylate, tricyclodecanedimethanol di(meth)acrylate, ethoxylated bisphenol A di(meth)acrylate, trimethylolpropane tri(meth)acrylate, ethoxylated trimethylolpropane tri(meth)acrylate, propoxylated trimethylolpropane tri(meth)acrylate, tris-(2-acryloxyethyl) isocyanurate, bis-(2-acryloxyethyl) isocyanurate, pentaerythritol tri(meth)acrylate, pentaerythritol tetra(meth)acrylate, ethoxylated pentaerythritol tetra(meth)acrylate, ditrimethylolpropane tetra(meth)acrylate, dipentaerythritol penta(meth)acrylate, dipentaerythritol hexa(meth)acrylate, and polypentaerythritol poly(meth)acrylate.

The polymerizable monomer (C), serving as a polymerization component, may be a single type or a combination of two or more polymerizable monomers (C) having different structures from each other.

The polymerizable monomer (C) can be produced by a known method, and a commercially available product thereof may be used.

In the polymer according to the present invention, the content proportion of the polymerizable monomer (C) is, relative to 100 parts by mass of the polymerizable monomer (A), for example, in a range of from 1 to 300 parts by mass, preferably in a range of from 5 to 250 parts by mass relative to 100 parts by mass of the polymerizable monomer (A), and more preferably in a range of from 10 to 200 parts by mass relative to 100 parts by mass of the polymerizable monomer (A). The percentage is more preferably in a range of from 10 to 150 parts by mass relative to 100 parts by mass of the polymerizable monomer (A). The content proportion of the polymerizable monomer (C) can be adjusted based on the feed ratio of raw materials of the polymerizable monomer (C) in producing the polymer according to the present invention.

In the polymer according to the present invention, the content proportion of the polymerizable monomer (C) is, for example, in a range of from 5 to 70 mass%, preferably from 6 to 65 mass%, more preferably from 7 to 60 mass%, particularly preferably from 8 to 55 mass%, and most preferably from 10 to 50 mass% relative to the total amount of the polymerization components of the polymer.

The polymerization component of the polymer according to the present invention may contain a polymerizable monomer (D) which is the polymerizable monomer (A) having one polymerizable unsaturated group.

The polymerizable monomer (D) is preferably a compound represented by the following General Formula (D-1). 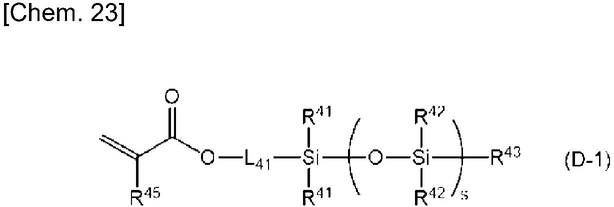 (In General Formula (D-1),
R⁴¹ is each independently an alkyl group having from 1 to 6 carbon atoms or a group represented by -OSi(R⁴⁴)₃ (R⁴⁴ is each independently an alkyl group having from 1 to 3 carbon atoms),
R⁴² is each independently an alkyl group having from 1 to 6 carbon atoms,
R⁴³ is an alkyl group having from 1 to 12 carbon atoms,
R⁴⁵ is a hydrogen atom or a methyl group,
L₄₁ is a divalent organic group optionally having an ether bond, and
s represents the number of repetitions)

The divalent organic group of L₄₁ is preferably a single bond, an alkylene group having from 1 to 50 carbon atoms, or an alkyleneoxy group having from 1 to 50 carbon atoms.

Examples of the alkylene group having from 1 to 50 carbon atoms in L₄₁ include a methylene group, an ethylene group, an n-propylene group, an n-butylene group, an n-pentylene group, an n-hexylene group, an n-heptylene group, an n-octylene group, an n-nonylene group, an n-decylene group, an n-dodecylene group, an isopropylene group, a 2-methylpropylene group, a 2-methylhexylene group, and a tetramethylethylene group.

The alkylene group having from 1 to 50 carbon atoms in L₄₁ is preferably an alkylene group having from 1 to 15 carbon atoms, more preferably an alkylene group having from 1 to 5 carbon atoms, and still more preferably a methylene group, an ethylene group, an n-propylene group, or an isopropylene group.

The alkyleneoxy group having from 1 to 50 carbon atoms in L₄₁ is, for example, a group in which one -CH₂- in the alkylene group is substituted with -O-.
The alkyleneoxy group having from 1 to 50 carbon atoms in L₄₁ is preferably an alkyleneoxy group having from 1 to 15 carbon atoms, more preferably an alkyleneoxy group having from 1 to 8 carbon atoms, and still more preferably a methyleneoxy group, an ethyleneoxy group, a propyleneoxy group, an oxytrimethylene group, a butyleneoxy group, an oxytetramethylene group, a pentyleneoxy group, a heptyleneoxy group or an octyleneoxy group.

When the divalent organic group of L₄₁ is an alkylene group having from 1 to 50 carbon atoms or an alkyleneoxy group having from 1 to 50 carbon atoms, in these divalent organic groups, some -CH₂- may be replaced with a carbonyl group (-C(=O)-), a phenylene group, an amide bond, or a urethane bond, and a hydroxyl group or the like may be substituted on a carbon atom.

The number of repeating s may be, for example, an integer of 1 or more. The number average of s is, for example, in a range of from 1 to 150, preferably in a range of from 1 to 100, more preferably in a range of from 1 to 50, and still more preferably in a range of from 1 to 25.
The number average value for s can be confirmed by measuring a number average molecular weight of the polymerizable monomer (D) by a method described in Examples.

The alkyl group having from 1 to 6 carbon atoms in R⁴¹ and R⁴² is preferably an alkyl group having from 1 to 3 carbon atoms, and more preferably a methyl group.
The alkyl group having from 1 to 12 carbon atoms in R⁴³ is preferably an alkyl group having from 1 to 8 carbon atoms, and more preferably an alkyl group having from 1 to 4 carbon atoms.

The polymerizable monomer (D) can be produced by a known method, and a commercially available product thereof may be used.
Specific examples of the polymerizable monomer (D) include α-(3-methacryloyloxy) propylpolydimethylsiloxane and 3-(methacryloyloxy)propyltris(trimethylsiloxy)silane.

The polymerizable monomer (D) as a polymerization component may be a single type or two or more types.

In the polymer according to the present invention, the content proportion of the polymerizable monomer (D) is, relative to 100 parts by mass of the polymerizable monomer (A), for example, in a range of from 10 to 500 parts by mass, preferably in a range of from 30 to 400 parts by mass relative to 100 parts by mass of the polymerizable monomer (A), and more preferably in a range of from 50 to 300 parts by mass relative to 100 parts by mass of the polymerizable monomer (A).
The content proportion of the polymerizable monomer (D) can be adjusted based on the feed ratio of raw materials of the polymerizable monomer (D) in producing the polymer according to the present invention.

As long as the polymer according to the present invention is, for example, a polymer including the polymerizable monomer (A), the optional polymerizable monomer (B), and the optional polymerizable monomer (C) as polymerization components, an additional polymerizable monomer other than the polymerizable monomer (A), the optional polymerizable monomer (B), and the optional polymerizable monomer (C) may be contained as a polymerization component in a range that does not impair the effect of the present invention. Examples of the other polymerizable monomer as a polymerization component include the above-described polymerizable monomer (D).
The polymer according to the present invention is preferably a polymer in which the polymerization components are substantially composed of the polymerizable monomer (A), the optional polymerizable monomer (B), and/or the optional polymerizable monomer (C), and more preferably a copolymer in which the polymerization components are only composed of the polymerizable monomer (A), the optional polymerizable monomer (B), and/or the optional polymerizable monomer (C).
The wording "substantially composed of" as used herein means that the total content proportion of the polymerizable monomer (A), the optional polymerizable monomer (B), and the optional polymerizable monomer (C) is 80 mass% or more, 90 mass% or more, 95 mass% or more, or 99 mass% or more, in the polymerization components of the polymer according to the present invention.

The polymerization form of the polymer according to the present invention is not particularly limited.
The polymer according to the present invention may be, for example, a random polymer of the polymerizable monomer (A), the optional polymerizable monomer (B) and the optional polymerizable monomer (C). Furthermore, the polymer according to the present invention may be, for example, a block polymer having a polymer block of any one or more of the polymerizable monomer (A), the optional polymerizable monomer (B), and the optional polymerizable monomer (C).

The polymer according to the present invention preferably contains no fluorine atom for reducing the environmental load.

The number average molecular weight (Mn) of the polymer according to the present invention is preferably in a range of from 1000 to 50000, more preferably in a range of from 1000 to 30000, and even more preferably in a range of from 1500 to 10000.
The weight average molecular weight (Mw) of the polymer according to the present invention is preferably in a range of from 1000 to 300000, more preferably in a range of from 1500 to 200000, still more preferably in a range of from 2000 to 100000, and particularly preferably in a range of from 3000 to 50000.

In the present invention, the weight average molecular weight (Mw) and the number average molecular weight (Mn) are values based on gel permeation chromatography (GPC) measurement calibrated with polystyrene standards.
The values of the number average molecular weight (Mn) and the weight average molecular weight (Mw) of the polymer according to the present invention are measured by the method described in Examples.

The anti-foaming agent of the present invention may contain the polymer of the present invention, and may also contain an anti-foaming agent other than the polymer of the present invention. The anti-foaming agent of the present invention may be the polymer of the present invention.

### [Method for producing polymer]

The method for producing the polymer according to the present invention is not particularly limited, and the polymer can be produced by a known method. The polymer according to the present invention can be produced by a solution polymerization method, a bulk polymerization method, an emulsion polymerization method, or the like based on a polymerization mechanism such as radical polymerization process, cationic polymerization process, or anionic polymerization process. For example, in a case of a radical polymerization method, a polymerizable monomer mixture is charged into an organic solvent, then a general-purpose radical polymerization initiator is added thereto, and thus the polymer according to the present invention can be produced.

As the polymerization initiator, various polymerization initiators can be used, and examples thereof include: peroxides such as t-butylperoxy-2-ethylhexanoate, benzoyl peroxide, and diacyl peroxide; azo compounds such as azobisisobutyronitrile, dimethyl azobisisobutyrate, and phenylazotriphenylmethane; and metal chelate compounds such as Mn(acac)₃.
If necessary, a chain transfer agent such as lauryl mercaptan, 2-mercaptoethanol, ethylthioglycolic acid, or octylthioglycolic acid, or a thiol compound having a coupling group such as γ-mercaptopropyltrimethoxysilane may be used as an additive such as a chain transfer agent.

Examples of the organic solvent include: alcohols such as ethanol, isopropyl alcohol, n-butanol, iso-butanol, and tert-butanol; ketones such as acetone, methyl ethyl ketone, methyl isobutyl ketone, and methyl amyl ketone; esters such as methyl acetate, ethyl acetate, butyl acetate, methyl lactate, ethyl lactate, and butyl lactate; monocarboxylic acid esters such as methyl 2-oxypropionate, ethyl 2-oxypropionate, propyl 2-oxypropionate, butyl 2-oxypropionate, methyl 2-methoxypropionate, ethyl 2-methoxypropionate, propyl 2-methoxypropionate, and butyl 2-methoxypropionate; polar solvents such as dimethylformamide, dimethyl sulfoxide, and N-methylpyrrolidone; ethers such as methyl cellosolve, cellosolve, butyl cellosolve, butyl carbitol, and ethyl cellosolve acetate; propylene glycols such as propylene glycol, propylene glycol monomethyl ether, and propylene glycol monomethyl ether acetate, propylene glycol monoethyl ether acetate and propylene glycol monobutyl ether acetate, and esters thereof; halogen-based solvents such as 1,1,1-trichloroethane and chloroform; ethers such as tetrahydrofuran and dioxane; aromatics such as benzene, toluene and xylene; and fluorinated inert liquids such as perfluorooctane and perfluorotri-n-butylamine.
These solvents may be used singly, or two or more types thereof may be used in combination.

The polymer according to the present invention can also be produced by living polymerization such as living radical polymerization or living anion polymerization.

In the living radical polymerization, a dormant species whose active polymerization terminal is protected by an atom or an atomic group reversibly generates a radical and reacts with a monomer, thereby a growth reaction proceeds, and the growth terminal does not lose activity even when the first monomer is consumed, and can react with a second monomer added sequentially and thereby affording a block polymer. Examples of such living radical polymerization include atom transfer radical polymerization (ATRP), reversible addition-fragmentation chain transfer polymerization (RAFT), nitroxide-mediated radical polymerization (NMP), and organotellurium-mediated radical polymerization (TERP). Among these methods, there is no particular restriction on which method to be used, but ATRP is preferable in terms of ease of control and the like. ATRP is a process that involves polymerization in which an organic halide, a sulfonyl halide compound, or the like is used as a polymerization initiator and a metal complex composed of a transition metal compound and a ligand is used as a catalyst.

Specific examples of the polymerization initiator that can be used in ATRP include 1-phenylethyl chloride, 1-phenylethyl bromide, chloroform, carbon tetrachloride, 2-chloropropionitrile, α,α'-dichloroxylene, α,α'-dibromoxylene, hexakis(α-bromomethyl)benzene, and alkyl esters having from 1 to 6 carbon atoms of 2-halogenated carboxylic acids having from 1 to 6 carbon atoms (such as 2-chloropropionic acid, 2-bromopropionic acid, 2-chloroisobutyric acid, 2-bromoisobutyric acid, etc.).
More specific examples of the alkyl ester having from 1 to 6 carbon atoms of 2-halogenated carboxylic acid having from 1 to 6 carbon atoms include methyl 2-chloropropionate, ethyl 2-chloropropionate, methyl 2-bromopropionate, and ethyl 2-bromoisobutyrate.

The transition metal compound that can be used in ATRP is represented by Mⁿ⁺Xₙ.
The transition metal Mⁿ⁺ of the transition metal compound represented by Mⁿ⁺Xₙ can be selected from the group consisting of Cu⁺, Cu²⁺, Fe²⁺, Fe³⁺, Ru²⁺, Ru³⁺, Cr²⁺, Cr³⁺, Mo⁶, Mo⁺, Mo²⁺, Mo³⁺, W²⁺, W³⁺, Rh³⁺, Rh⁴⁺, Co⁺, Co²⁺, Re²⁺, Re³⁺, Ni⁰, Ni⁺, Mn³⁺, Mn⁴⁺, V²⁺, V³⁺, Zn⁺, Zn²⁺, Au⁺, Au²⁺, Ag⁺, and Ag²⁺.
X of the transition metal compound represented by Mⁿ⁺Xₙ can be selected from the group consisting of a halogen atom, an alkoxyl group having from 1 to 6 carbon atoms, (SO₄)_{1/2}, (PO₄)_{1/3}, (HPO₄)_{1/2}, (H₂PO₄), triflate, hexafluorophosphate, methanesulfonate, aryl sulfonate (preferably benzenesulfonate or toluenesulfonate), SeR¹¹, CN and R¹²COO. Here, R¹¹ represents an aryl group, a linear or branched alkyl group having from 1 to 20 carbon atoms (preferably from 1 to 10 carbon atoms), and R¹² represents a hydrogen atom, or a linear or branched alkyl group having from 1 to 6 carbon atoms (preferably a methyl group) which may be substituted with halogen for 1 to 5 times (preferably with fluorine or chlorine for 1 to 3 times).
n of the transition metal compound represented by Mⁿ⁺Xₙ represents a formal charge on the metal, and is an integer of from 0 to 7.

Examples of a ligand compound capable of coordinate-bonding to the transition metal of the above-mentioned transition metal compound include: a compound having a ligand containing one or more nitrogen atoms, oxygen atoms, phosphorus atoms, or sulfur atoms that are capable of coordinating to the transition metal via a σ bond; a compound having a ligand containing two or more carbon atoms that are capable of coordinating to the transition metal via a π bond; and a compound having a ligand that is capable of coordinating to the transition metal via a µ bond or an η bond.

The above-mentioned transition metal complex is not particularly limited, and preferred examples thereof include transition metal complexes of Groups 7, 8, 9, 10, and 11, and further preferred examples thereof include complexes of zerovalent copper, monovalent copper, divalent ruthenium, divalent iron, or divalent nickel.

Specific examples of the catalyst that can be used in ATRP, when the central metal is copper, include complexes with ligands such as 2,2'-bipyridyl and derivatives thereof, 1,10-phenanthroline and derivatives thereof, and polyamines such as tetramethylethylenediamine, pentamethyldiethylenetriamine, and hexamethyltris(2-aminoethyl)amine. Examples of the divalent ruthenium complex include dichlorotris(triphenylphosphine)ruthenium, dichlorotris(tributylphosphine)ruthenium, dichloro(cyclooctadiene)ruthenium, dichloro(benzene)ruthenium, dichloro(p-cymene)ruthenium, dichloro(norbornadiene)ruthenium, cis-dichlorobis(2,2'-bipyridine)ruthenium, dichlorotris(1,10-phenanthroline)ruthenium, and carbonylchlorohydridetris(triphenylphosphine)ruthenium. Furthermore, examples of the divalent iron complex include bis(triphenylphosphine) complexes and triazacyclononane complexes.

A solvent is preferably used in living radical polymerization.
Examples of the solvent used in living radical polymerization include: ester solvents such as ethyl acetate, butyl acetate, and propylene glycol monomethyl ether acetate; ether solvent such as diisopropyl ether, dimethoxyethane, and diethylene glycol dimethyl ether; halogen-based solvents such as dichloromethane and dichloroethane; aromatic solvents such as toluene and xylene; ketone solvents such as methyl ethyl ketone, methyl isobutyl ketone, and cyclohexanone; alcohol solvents such as methanol, ethanol, or isopropanol; aprotic polar solvents such as dimethylformamide and dimethylsulfoxide.
The above-mentioned solvents may be used singly, or two or more types thereof may be used in combination.

The polymerization temperature in the living radical polymerization is preferably in a range of from room temperature to 120°C.

When the polymer according to the present invention is produced by living radical polymerization, there may be a case where a metal derived from the transition metal compound used in the polymerization remains in the resulting polymer. After completion of the polymerization, the metal remaining in the resulting polymer is preferably removed by using active alumina or the like.

### [Lubricating oil composition]

The anti-foaming agent of the present invention can be suitably used as an anti-foaming agent for a lubricating oil composition, and the lubricating oil composition of the present invention contains the anti-foaming agent of the present invention.

The anti-foaming agent of the present invention is a polymer having a crosslinked structure by virtue of containing, as a polymerization component, the polymerizable monomer (A) having two or more polymerizable unsaturated groups, and is capable of maintaining low solubility in a lubricating base oil by suppressing the spread of molecules of the anti-foaming agent even in a high-temperature environment. This allows the anti-foaming agent of the present invention to exhibit high anti-foaming performance even in a high-temperature environment.
In a machine including an internal combustion engine or an electric motor, a high shear force is applied to a drive unit of the machine, but the anti-foaming agent of the present invention suppresses reduction to low molecular weight by virtue of the crosslinked structure thereof, and therefore, the anti-foaming performance can be suppressed from being deteriorated.

The anti-foaming agent of the present invention has high anti-foaming performance as described above, and can be used without limitation in a lubricating oil composition for a drive system device such as a shock absorber, a transmission, or a power steering of an automobile.

The content proportion of the anti-foaming agent of the present invention in the lubricating oil composition of the present invention is not particularly limited, and is, for example, in a range of from 1 to 1000 ppm by mass, preferably in a range of from 5 to 700 ppm by mass, and more preferably in a range of from 10 to 400 ppm by mass of the total amount of the lubricating oil composition.

The lubricating base oil of the lubricating oil composition of the present invention may be any known base oil, and may be a mineral oil, a synthetic oil, or a mixed oil of a mineral oil and a synthetic oil.

Examples of the mineral oil include a mineral oil obtained by subjecting a lubricating oil fraction, which is produced by vacuum distillation of an atmospheric residue obtained through atmospheric distillation of crude oil, to one or more refining treatments such as solvent deasphalting, solvent extraction, hydrocracking, solvent dewaxing, catalytic dewaxing, or hydrotreating, and examples thereof include paraffinic mineral oil and naphthenic mineral oil.
In addition, examples thereof include a mineral oil-based wax and a mineral oil produced by isomerizing a wax (GTL wax) produced by the Fischer-Tropsch process or the like.

Examples of the synthetic oil include polyolefins such as polybutene, α-olefin homopolymers, and copolymers (for example, ethylene-α-olefin copolymers), various esters such as polyol esters, dibasic acid esters, and phosphoric acid esters, various ethers such as polyphenyl ethers, polyglycols, alkylbenzenes and alkylnaphthalenes.

The lubricating base oil may be used singly, or two or more types thereof may be used in combination.

The kinematic viscosity of the lubricating base oil at 100°C is preferably in a range of from 1 to 20 mm²/s, more preferably in a range of from 2 to 15 mm²/s, and even more preferably in a range of from 2 to 10 mm²/s.
When the kinematic viscosity of the lubricating base oil at 100°C falls within the above range, evaporation loss is reduced and power loss due to viscous resistance is not excessively large, thereby making it easier to achieve an improvement in fuel efficiency.

The lubricating base oil preferably has a paraffin content (sometimes referred to as %Cp) by n-d-M ring analysis of 70% or more, more preferably 75% or more, and even more preferably 80% or more.
When the paraffin content is within the above range, the oxidation stability and the like of the lubricating base oil become good.

The content proportion of the lubricating base oil in the lubricating oil composition is, for example, in a range of from 65 to 95 mass%, preferably in a range of from 70 to 95 mass%, and more preferably in a range of from 70 to 90 mass% of the total amount of the lubricating oil composition.

The lubricating oil composition of the present invention may include the anti-foaming agent and lubricating base oil of the present invention, and may further contain other additives.
Other additives that may be contained include an ashless detergent, an ashless friction modifier, an anti-wear agent, an extreme pressure agent, a viscosity index improver, a metal deactivator, a pour point depressant, and a rust inhibitor. These additives may be used singly, or two or more types thereof may be used in combination.

The content of each of the other additives can be appropriately adjusted in a range that does not impair the effect of the present invention, and is usually 0.001 to 25 mass%, preferably 0.005 to 20 mass%, and more preferably 0.01 to 15 mass% based on the total amount of the lubricating oil composition. The total content of the other additives is preferably 25 mass% or less, more preferably 20 mass% or less, and even more preferably 15 mass% or less based on the total amount of the lubricating oil composition.

Examples of the ashless detergent include alkenyl succinic acid imide, such as alkenyl succinic acid monoimide and alkenyl succinic acid bisimide, and boron-modified alkenyl succinic acid imide.

Examples of the ashless friction modifier include an aliphatic amine, a fatty acid ester, a fatty acid amide, a fatty acid, an aliphatic alcohol, and an aliphatic ether, each of which has at least one alkyl group or alkenyl group having from 6 to 30 carbon atoms in the molecule.

Examples of the anti-wear agent or extreme pressure agent include sulfur-containing compounds such as zinc dithiophosphate; phosphorus-containing compounds such as phosphite esters, phosphate esters, phosphonate esters, and amine salts or metal salts thereof; and sulfur- and phosphorus-containing anti-wear agents such as thiophosphite esters, thiophosphate esters, thiophosphonate esters, and amine salts or metal salts thereof.

Examples of the viscosity index improver include polymethacrylate, dispersed polymethacrylate, an olefin-based copolymer (for example, an ethylene-propylene copolymer), a dispersed olefin-based copolymer, and a styrene-based copolymer (for example, a styrene-diene copolymer or a styrene-isoprene copolymer).

Examples of the metal deactivator include a benzotriazole-based compound, a tolyltriazole-based compound, an imidazole-based compound, and a pyrimidine-based compound.

Examples of the pour point depressant include an ethylene-vinyl acetate copolymer, a condensate of chlorinated paraffin and naphthalene, a condensate of chlorinated paraffin and phenol, polymethacrylate, and polyalkylstyrene.

Examples of the rust inhibitor include a petroleum sulfonate, an alkylbenzene sulfonate, a dinonylnaphthalene sulfonate, an alkenyl succinate ester, and a polyhydric alcohol ester.

The lubricating oil composition of the present invention is suitably used in a machine including an internal combustion engine or an electric motor for lubricating a drive unit of the machine.
Regarding lubrication of the drive unit, for example, in an electric vehicle, the drive unit is generally integrated with a motor, an inverter, and a gearbox, and the inside of the gearbox is filled with the lubricating oil composition of the present invention, whereby the drive unit can be lubricated. In the case of a gasoline-powered vehicle, in an internal combustion engine which is a drive unit, the lubricating oil composition of the present invention is stored in an oil pan and supplied into a cylinder via an oil pump, whereby the starting unit can be lubricated. The lubrication of the drive unit is not limited to these forms, and it is possible to lubricate the drive unit by filling or supplying the lubricating oil composition of the present invention to a portion where metals come into contact with each other.

The machine for which the lubricating oil composition of the present invention can be used is not limited as long as the machine includes an internal combustion engine or an electric motor, such as an automobile (a gasoline-powered vehicle or an electric vehicle), a robot (an industrial robot or an entertainment robot), an aircraft (an airplane or a helicopter), a ship, and various home appliances.

### EXAMPLES

The present invention will be specifically described with reference to Examples and Comparative Examples below.
Note that the present invention is not limited to the following Examples.

In Examples and Comparative Examples, the weight average molecular weight (Mw) and the number average molecular weight (Mn) are values based on gel permeation chromatography (GPC) measurement calibrated with polystyrene standards.
The measurement conditions of GPC are as follows. In the chemical formula, n represents an arbitrary repeating unit.

### [GPC measurement conditions]

Measuring instrument: high performance GPC system "HLC-8320GPC" available from Tosoh Corporation
Columns: "TSK GUARDCOLUMN SuperHZ-L" available from Tosoh Corporation + "TSK gel SuperHZM-N" available from Tosoh Corporation + "TSK gel SuperHZM-N" available from Tosoh Corporation + "TSK gel SuperHZM-N" available from Tosoh Corporation + "TSK gel SuperHZM-N" available from Tosoh Corporation
Detector: RI (differential refractometer)
Data processing: "EcoSEC Data Analysis Version 1.07" available from Tosoh Corporation
Column temperature: 40°C
Developing solvent: tetrahydrofuran
Flow rate: 0.35 mL/min
Measurement sample: 7.5 mg of a sample was dissolved in 10 mL of tetrahydrofuran, the resultant solution was filtered through a microfilter, and the obtained product was used as a measurement sample.
Sample injection volume: 20 µL
Standard sample: The following monodisperse polystyrenes having known molecular weights were used in accordance with the measurement manual of "HLC-8320GPC".

### (Monodisperse polystyrene)

"A-300" available from Tosoh Corporation
"A-500" available from Tosoh Corporation
"A-1000" available from Tosoh Corporation
"A-2500" available from Tosoh Corporation
"A-5000" available from Tosoh Corporation
"F-1" available from Tosoh Corporation
"F-2" available from Tosoh Corporation
"F-4" available from Tosoh Corporation
"F-10" available from Tosoh Corporation
"F-20" available from Tosoh Corporation
"F-40" available from Tosoh Corporation
"F-80" available from Tosoh Corporation
"F-128" available from Tosoh Corporation
"F-288" available from Tosoh Corporation

### (Synthesis Example 1: Synthesis of anti-foaming agent (1))

Into a glass flask equipped with a stirrer, a thermometer, a condenser, and a dropping device, 40 parts by mass of dipropylene glycol monomethyl ether acetate as a solvent was charged and, while the dipropylene glycol monomethyl ether acetate was stirred in a nitrogen stream, the temperature was raised to 105°C.

Next, two types of dropping liquids, i.e., a monomer solution obtained by dissolving 25 parts by mass of silicone dimethacrylate monomer (number average molecular weight: 1000; n in the formula is the repeating unit) represented by the following General Formula (A1) and 25 parts by mass of methoxypolyethylene glycol acrylate (where the number of repeating ethylene oxide chains was about 9) in 140 parts by mass of dipropylene glycol monomethyl ether acetate, and a polymerization initiator solution obtained by dissolving 7.5 parts by mass of t-butylperoxy-2-ethylhexanoate as a radical polymerization initiator in 20 parts by mass of dipropylene glycol monomethyl ether acetate were set in different dropping devices, and simultaneously added dropwise over 2 hours while maintaining the temperature in the flask at 105°C. After completion of the dropwise addition, the flask was stirred at 105°C for 4 hours to obtain a solution of an anti-foaming agent (1).

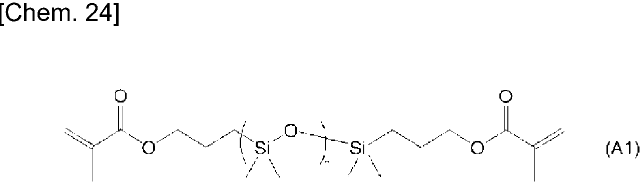

As a result of GPC measurement of the molecular weight of the obtained anti-foaming agent (1), the weight average molecular weight (Mw) was 13300.

### (Synthesis Example 2: Synthesis of anti-foaming agent (2))

Into a glass flask equipped with a stirrer, a thermometer, a condenser, and a dropping device, 30 parts by mass of dipropylene glycol monomethyl ether acetate as a solvent was charged and, while the dipropylene glycol monomethyl ether acetate was stirred in a nitrogen stream, the temperature was raised to 110°C.

Next, two types of dropping liquids, i.e., a monomer solution obtained by dissolving 12.5 parts by mass of silicone dimethacrylate monomer (number average molecular weight: 1000) represented by General Formula (A1) and 12.5 parts by mass of polyethylene glycol dimethacrylate (where the number of repeating ethylene oxide chains was about 9) in 60 parts by mass of dipropylene glycol monomethyl ether acetate, and a polymerization initiator solution obtained by dissolving 7.5 parts by mass of t-butylperoxy-2-ethylhexanoate as a radical polymerization initiator in 10 parts by mass of dipropylene glycol monomethyl ether acetate were set in different dropping devices, and simultaneously added dropwise over 2 hours while maintaining the temperature in the flask at 110°C. After completion of the dropwise addition, the flask was stirred at 110°C for 3 hours to obtain a solution of an anti-foaming agent (2).

As a result of GPC measurement of the molecular weight of the obtained anti-foaming agent (2), the weight average molecular weight (Mw) was 36700.

### (Synthesis Example 3: Synthesis of anti-foaming agent (3))

A glass flask equipped with a stirrer, a thermometer, a condenser, and a dropping device was charged with 100 parts by mass of a silicone compound (number average molecular weight: 1000) represented by the following General Formula (A3-1), 90 parts by mass of heptane, and 0.1 parts by mass of stannous octylate. Next, stirring was started under an air stream, the temperature in the flask was raised to 75°C, and 30 parts by mass of 2-isocyanatoethyl acrylate was added dropwise over 15 minutes. After completion of the dropwise addition, the temperature was raised to 80°C, and the mixture was stirred for 1 hour to perform the reaction. As a result, disappearance of an absorption peak of the isocyanate group was confirmed by IR spectrum measurement. Thus, a silicone diacrylate monomer represented by the following General Formula (A3) was obtained.

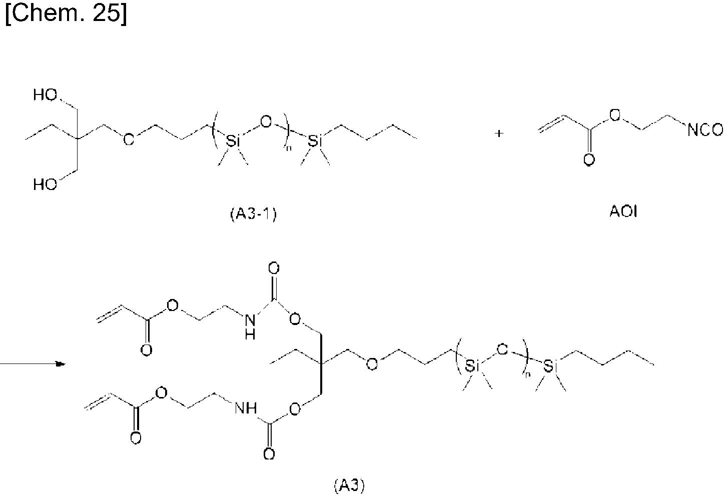

Into a glass flask equipped with a stirrer, a thermometer, a condenser, and a dropping device, 30 parts by mass of butyl acetate as a solvent was charged and, while the butyl acetate was stirred in a nitrogen stream, the temperature was raised to 100°C.
Next, two types of dropping liquids, i.e., a monomer solution obtained by dissolving 20 parts by mass of silicone diacrylate monomer represented by General Formula (A3) and 20 parts by mass of methoxypolyethylene glycol acrylate (where the number of repeating ethylene oxide chains was about 9) in 55 parts by mass of butyl acetate, and a polymerization initiator solution obtained by dissolving 2 parts by mass of t-butylperoxy-2-ethylhexanoate as a radical polymerization initiator in 10 parts by mass of butyl acetate were set in different dropping devices, and simultaneously added dropwise over 2 hours while maintaining the temperature in the flask at 100°C. After completion of the dropwise addition, the flask was stirred at 100°C for 4 hours to obtain a solution of an anti-foaming agent (3).

As a result of GPC measurement of the molecular weight of the obtained anti-foaming agent (3), the weight average molecular weight (Mw) was 18800.

### (Synthesis Example 4: Synthesis of anti-foaming agent (4))

A glass flask equipped with a stirrer, a thermometer, a condenser, and a dropping device was charged with 215 parts by mass of a silicone compound represented by the following General Formula (A4-1), 30 parts by mass of 1,3-dimercapto 2-propanol, 200 parts by mass of methyl ethyl ketone, and 0.1 parts by mass of NaH. Next, stirring was started under a nitrogen atmosphere, the temperature in the flask was raised to 60°C, and the mixture was stirred for 1.5 hours to obtain a silicone compound represented by the following General Formula (A4-2).

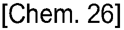

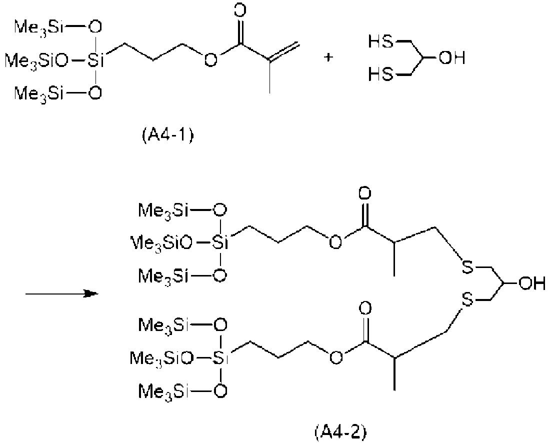

A glass flask equipped with a stirrer, a thermometer, a condenser, and a dropping device was charged with 50 parts by mass of a silicone compound represented by General Formula (A4-2), 40 parts by mass of heptane, and 0.1 parts by mass of stannous octylate. Next, stirring was started under an air stream, the temperature in the flask was raised to 75°C, and 13 parts by mass of 1,1-(bisacryloyloxymethyl)ethyl isocyanate was added dropwise over 15 minutes. After completion of the dropwise addition, the temperature was raised to 80°C, and the mixture was stirred for 1 hour to perform the reaction. As a result, disappearance of the absorption peak of the isocyanate group was confirmed by IR spectrum measurement. Thus, a silicone diacrylate monomer represented by the following General Formula (A4) was obtained.

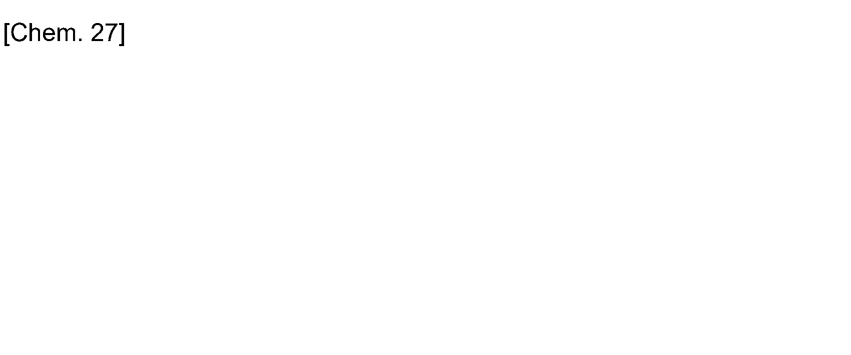

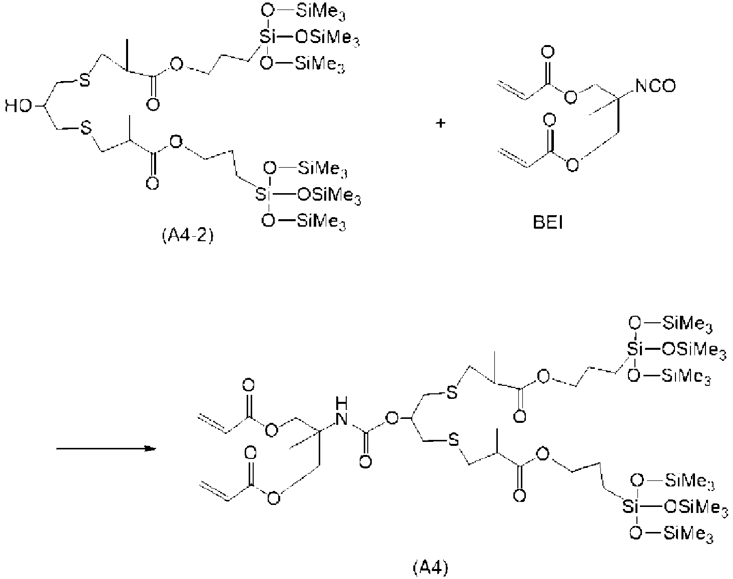

Into a glass flask equipped with a stirrer, a thermometer, a condenser, and a dropping device, 52 parts by mass of n-butyl acetate as a solvent was charged and, while the n-butyl acetate was stirred in a nitrogen stream, the temperature was raised to 85°C.
Next, two types of dropping liquids, i.e., a monomer solution obtained by dissolving 30 parts by mass of silicone diacrylate monomer represented by General Formula (A4) and 20 parts by mass of methoxypolyethylene glycol methacrylate (where the number of repeating ethylene oxide chains was about 9) in 50 parts by mass of butyl acetate, and a polymerization initiator solution obtained by dissolving 3 parts by mass of t-butylperoxy-2-ethylhexanoate as a radical polymerization initiator in 15 parts by mass of n-butyl acetate were set in different dropping devices, and simultaneously added dropwise over 2 hours while maintaining the temperature in the flask at 85°C. After completion of the dropwise addition, the flask was stirred at 85°C for 4 hours, then the temperature was raised to 110°C, and further stirred for 1 hour to obtain a solution of an anti-foaming agent (4).

As a result of GPC measurement of the molecular weight of the obtained anti-foaming agent (4), the weight average molecular weight (Mw) was 5400.

### (Synthesis Example 5: Synthesis of anti-foaming agent (5))

Into a glass flask equipped with a stirrer, a thermometer, a condenser, and a dropping device, 50 parts by mass of propylene glycol methyl ether acetate as a solvent was charged and, while the propylene glycol methyl ether acetate was stirred in a nitrogen stream, the temperature was raised to 105°C.

Next, two types of dropping liquids, i.e., a monomer solution obtained by dissolving 6.75 parts by mass of a cyclic silicone monomer represented by the following chemical formula (A5), 16.8 parts by mass of methoxypolyethylene glycol acrylate (where the number of repeating ethylene oxide chains was about 9), and 12.1 parts by mass of a silicone compound represented by General Formula (A4-1) in 65 parts by mass of propylene glycol methyl ether acetate, and a polymerization initiator solution obtained by dissolving 7.1 parts by mass of t-butylperoxy-2-ethylhexanoate as a radical polymerization initiator in 10 parts by mass of propylene glycol methyl ether acetate were set in different dropping devices, and simultaneously added dropwise over 2 hours while maintaining the temperature in the flask at 105°C. After completion of the dropwise addition, the flask was stirred at 105°C for 3 hours to obtain a solution of an anti-foaming agent (5).

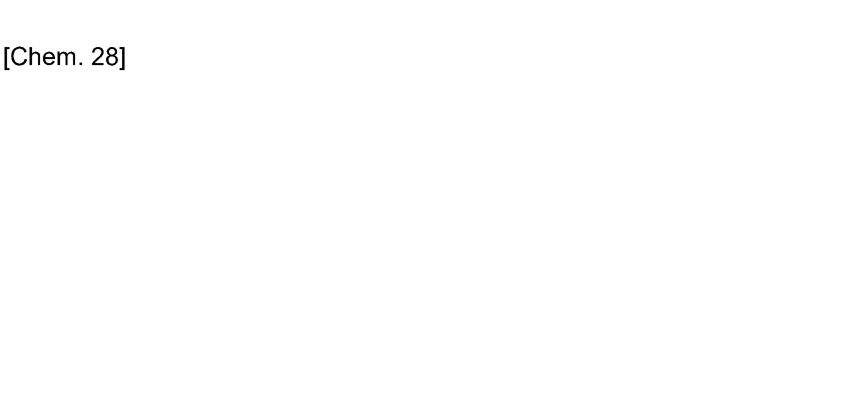

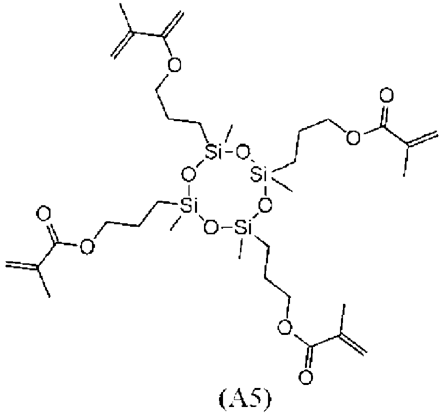

As a result of GPC measurement of the molecular weight of the obtained anti-foaming agent (5), the weight average molecular weight (Mw) was 26000.

### (Synthesis Example 6: Synthesis of anti-foaming agent (6))

Into a glass flask equipped with a stirrer, a thermometer, a condenser, and a dropping device, 60 parts by mass of propylene glycol methyl ether acetate as a solvent was charged and, while the propylene glycol methyl ether acetate was stirred in a nitrogen stream, the temperature was raised to 105°C.

Next, two types of dropping liquids, i.e., a monomer solution obtained by dissolving 25 parts by mass of a silicone monomer represented by the following chemical formula (A6) and 25 parts by mass of methoxypolyethylene glycol acrylate (where the number of repeating ethylene oxide chains was about 9) in 100 parts by mass of propylene glycol methyl ether acetate, and a polymerization initiator solution obtained by dissolving 5 parts by mass of t-butylperoxy-2-ethylhexanoate as a radical polymerization initiator in 20 parts by mass of propylene glycol methyl ether acetate were set in different dropping devices, and simultaneously added dropwise over 2 hours while maintaining the temperature in the flask at 105°C. After completion of the dropwise addition, the flask was stirred at 105°C for 3 hours to obtain a solution of an anti-foaming agent (6).

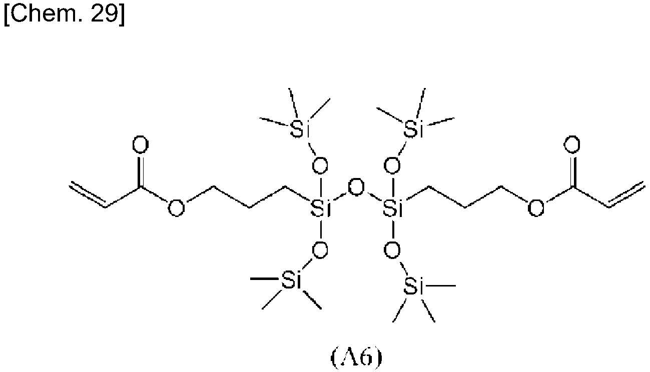

As a result of GPC measurement of the molecular weight of the obtained anti-foaming agent (6), the weight average molecular weight (Mw) was 10000.

### (Synthesis Example 7: Synthesis of anti-foaming agent (7))

Into a glass flask equipped with a stirrer, a thermometer, a condenser, and a dropping device, 34 parts by mass of n-butyl acetate as a solvent was charged and, while the n-butyl acetate was stirred in a nitrogen stream, the temperature was raised to 95°C.

Next, two types of dropping liquids, i.e., a monomer solution obtained by dissolving 16 parts by mass of a silicone monomer mixture represented by the following Formulas (A7), (A8), and (A9), 15 parts by mass of methoxypolyethylene glycol methacrylate (where the number of repeating ethylene oxide chains was about 9), and 3 parts by mass of methyl methacrylate in 33 parts by mass of n-butyl acetate, and a polymerization initiator solution obtained by dissolving 3 parts by mass of t-butylperoxy-2-ethylhexanoate as a radical polymerization initiator in 10 parts by mass of n-butyl acetate were set in different dropping devices, and simultaneously added dropwise over 2 hours while maintaining the temperature in the flask at 95°C. After completion of the dropwise addition, the flask was stirred at 95°C for 2 hours, then the temperature was raised to 110°C, and further stirred for 1 hour to obtain a solution of an anti-foaming agent (7).

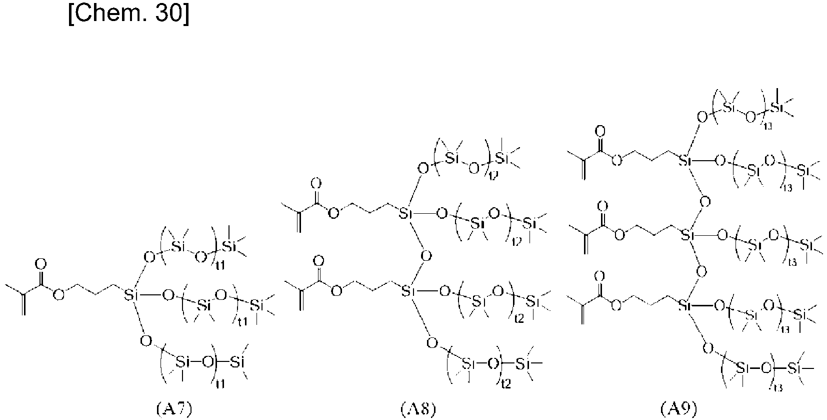

### (t1, t2, and t3 are repeating units, each of which is an integer of from 0 to 7)

As a result of GPC measurement of the molecular weight of the obtained anti-foaming agent (7), the average weight average molecular weight (Mw) was 44000.

### (Synthesis Example 8: Synthesis of anti-foaming agent (8))

Into a glass flask equipped with a stirrer, a thermometer, a condenser, and a dropping device, 30 parts by mass of propylene glycol methyl ether acetate as a solvent was charged and, while the propylene glycol methyl ether acetate was stirred in a nitrogen stream, the temperature was raised to 105°C.

Next, two types of dropping liquids, i.e., a monomer solution obtained by dissolving 5 parts by mass of a silicone dimethacrylate monomer (number average molecular weight: 400)) represented by General Formula (A1) and a silicone monomer mixture represented by the following Formula (A10), 5 parts by mass of 3-(methacryloyloxy)propyltris(trimethylsiloxy)silane, and 10 parts by mass of methoxypolyethylene glycol methacrylate (where the number of repeating ethylene oxide chains was about 9) in 10 parts by mass of propylene glycol methyl ether acetate, and a polymerization initiator solution obtained by dissolving 1 part by mass of t-butylperoxy-2-ethylhexanoate as a radical polymerization initiator in 7 parts by mass of propylene glycol methyl ether acetate were set in different dropping devices, and simultaneously added dropwise over 2 hours while maintaining the temperature in the flask at 105°C. After completion of the dropwise addition, the flask was stirred at 105°C for 3 hours to obtain a solution of an anti-foaming agent (8).

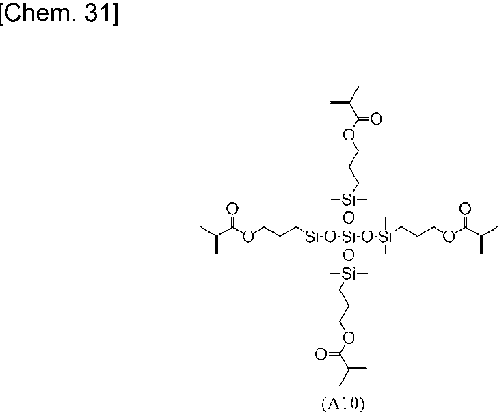

As a result of GPC measurement of the molecular weight of the obtained anti-foaming agent (8), the weight average molecular weight (Mw) was 20000.

### (Comparative Synthesis Example 1: Synthesis of anti-foaming agent (1'))

Into a glass flask equipped with a stirrer, a thermometer, a condenser, and a dropping device, 52 parts by mass of n-butyl acetate as a solvent was charged and, while the n-butyl acetate was stirred in a nitrogen stream, the temperature was raised to 85°C.

Next, two types of dropping liquids, i.e., 30 parts by mass of 3-(methacryloyloxy)propyltris (trimethylsiloxy)silane dissolved in 50 parts by mass of n-butyl acetate with 20 parts by mass of methoxypolyethylene glycol methacrylate (where the number of repeating ethylene oxide chains was about 9), and a polymerization initiator solution obtained by dissolving 3 parts by mass of t-butylperoxy-2-ethylhexanoate as a radical polymerization initiator in 15 parts by mass of n-butyl acetate, were set in different dropping devices. While the inside of the flask was kept at 85°C, the monomer solution and the polymerization initiator solution were simultaneously added dropwise over 2 hours. After completion of the dropwise addition, the flask was stirred at 85°C for 4 hours, then the temperature was raised to 110°C, and the flask was further stirred for 1 hour to obtain a solution of an anti-foaming agent (1').

As a result of GPC measurement of the molecular weight of the obtained anti-foaming agent (1'), the weight average molecular weight (Mw) was 40000.

### (Comparative Synthesis Example 2: Synthesis of Anti-Foaming Agent (2'))

A solution of an anti-foaming agent (2') was obtained in the same manner as in Comparative Synthesis Example 1 except that 30 parts by mass of a compound (number average molecular weight: 5000) represented by the following General Formula (A2') was used instead of 3-methacryloyloxypropyltris(trimethylsiloxy)silane.

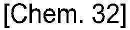

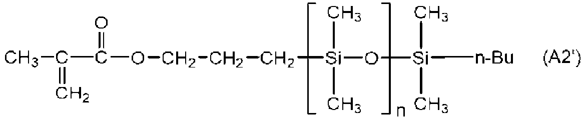

As a result of GPC measurement of the molecular weight of the obtained anti-foaming agent (2'), the weight average molecular weight (Mw) was 25000.

### (Comparative Synthesis Example 3: Synthesis of anti-foaming agent (3'))

A solution of an anti-foaming agent (3') was obtained in the same manner as in Comparative Synthesis Example 1 except that 30 parts by mass of a compound (number average molecular weight: 1000) represented by General Formula (A2') was used instead of 3-methacryloyloxypropyltris(trimethylsiloxy)silane.

As a result of GPC measurement of the molecular weight of the obtained anti-foaming agent (3'), the weight average molecular weight (Mw) was 27000.

A commercially available dimethyl silicone ("KF-96-50,000 cs" available from Shin-Etsu Silicone Co., Ltd.) represented below was separately provided as an anti-foaming agent (4').

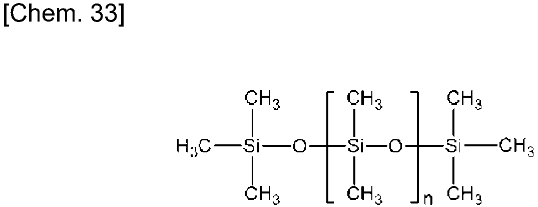

Using the anti-foaming agent produced above, the following foaming test was performed to evaluate the anti-foaming performance of the anti-foaming agent. The results are presented in Table 1.

### (Preparation of lubricating oil composition)

A lubricating oil composition was prepared by adding, to 100 parts by mass of a base lubricating oil mainly composed of a lubricating base oil (paraffinic mineral oil) and containing small amounts of various additives (such as a viscosity index improver, a phosphorous acid ester compound, a thiadiazole compound, a calcium detergent, a metal deactivator, an ashless dispersant, and an antioxidant), the anti-foaming agent listed in Table 1, which was diluted with kerosene, in the amount listed in Table 1. In Comparative Example 5, no anti-foaming agent was added.

The resulting lubricating oil composition was subjected to the foaming test described below. The results are presented in Table 1.

### (Foaming test)

The foaming test was performed in accordance with a homogenizer method disclosed in JP 2008-120880 A.

Using a homogenizer ("T.K. Robomix" available from PRIMIX Corporation) equipped with a generator shaft ("Minimixer" available from PRIMIX Corporation), the lubricating oil composition was stirred according to the following conditions, and the reading (mL) of the oil level before stirring was subtracted from the reading (mL) of the foaming surface after 3 seconds from the end of stirring to obtain the foaming amount (mL). The smaller the foaming amount, the better the anti-foaming property.
Rotation speed: 16000 rpm
Oil temperature: 80°C or 120°C
Oil amount: 80 ml
Container: 200 ml graduated cylinder (inner diameter of φ36 mm)
Stirring time: 1 minute

**[Table 1]**

| | | Example 1 | Example 2 | Example 3 | Example 4 | Example 5 | Example 6 | Example 7 | Example 8 | Comparative Example 1 | Comparative Example 2 | Comparative Example 3 | Comparative Example 4 | Comparative Example 5 |
|---|---|---|---|---|---|---|---|---|---|---|---|---|---|---|
| Anti-foaming agent | | Anti-foaming agent (1) | Anti-foaming agent (2) | Anti-foaming agent (3) | Anti-foaming agent (4) | Anti-foaming agent (5) | Anti-foaming agent (6) | Anti-foaming agent (7) | Anti-foaming agent (8) | Anti-foaming agent (1') | Anti-foaming agent (2') | Anti-foaming agent (3') | Anti-foaming agent (4') | - |
| Added amount [ppm by mass] | | 100 | 100 | 100 | 100 | 100 | 100 | 100 | 100 | 100 | 100 | 100 | 100 | - |
| Active ingredient content of anti-foaming agent [mass%] | | 1 | 1 | 1 | 1 | 1 | 1 | 1 | 1 | 1 | 1 | 1 | 1 | - |
| Foaming amount [mL] | | 0 | 0 | 8 | 10 | 10 | 0 | 2 | 0 | 10 | 14 | 100 | 30 | 20 |
| | 80°C 120°C | 26 | 28 | 40 | 28 | 30 | 8 | 26 | 4 | 100 | 100 | 100 | 100 | 50 |

From the results in Table 1, it can be seen that the anti-foaming agents (1) to (8), which are polymers containing a plymerizable monomer having a specific silicone functional group and two or more polymerizable unsaturated groups, all exhibit excellent anti-foaming properties even in a high-temperature environment. On the other hand, any of the anti-foaming agents (1') to (4') that do not contain a polymerizable monomer having a specific silicone functional group and two or more polymerizable unsaturated groups as the polymerization component does not exhibit sufficient anti-foaming properties in a high-temperature environment.

## Claims

1. An anti-foaming agent comprising a polysiloxane structure represented by -[OSi(R)₂]ₓ- (R is each independently an alkyl group having from 1 to 6 carbon atoms, and x is a number of repetitions), having a functional group represented by a polymerizable monomer (a1) having two or more polymerizable unsaturated groups and/or -Si[OSi(R)₃]ₙ [R']₃₋ₙ (n is an integer of from 1 to 3, R is each independently an alkyl group having from 1 to 6 carbon atoms, and R' is each independently an alkyl group having from 1 to 6 carbon atoms), and containing a polymer including a polymerizable monomer (A), which is a polymerizable monomer (a2) having two or more polymerizable unsaturated groups, as at least a polymerization component.

2. The anti-foaming agent according to claim 1, wherein the polymerizable monomer (A) is a compound represented by General Formula (A-1) and/or a compound represented by General Formula (A-2): 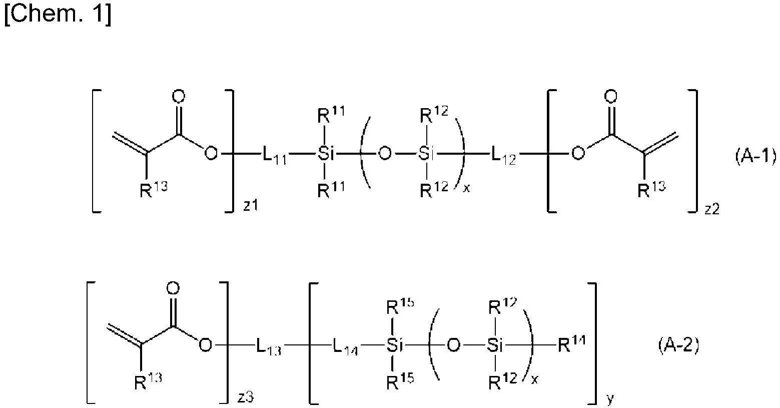
where, in General Formula (A-1) and General Formula (A-2),
R¹¹ is each independently an alkyl group having from 1 to 6 carbon atoms,
R¹² is each independently an alkyl group having from 1 to 6 carbon atoms,
R¹³ is each independently a hydrogen atom or a methyl group,
R¹⁴ is an alkyl group having from 1 to 12 carbon atoms,
R¹⁵ is each independently an alkyl group having from 1 to 6 carbon atoms or a group represented by -OSi(R¹⁶)₃ (R¹⁶ is each independently an alkyl group having from 1 to 6 carbon atoms),
x represents a number of repetitions,
y is an integer of 1 or more,
z1 and z2 are each independently an integer of 1 or more,
z3 is an integer of 2 or more,
L₁₁ is an organic group optionally having a z1 + monovalent ether bond,
L₁₂ is an organic group optionally having a z2 + monovalent ether bond,
L₁₃ is an organic group optionally having a z3 + y-valent ether bond, and
L₁₄ is a divalent organic group optionally having an ether bond.

3. An anti-foaming agent comprising a polymer including, as at least a polymerization component, a polymerizable monomer (A') which is a compound represented by General Formula (A-3): 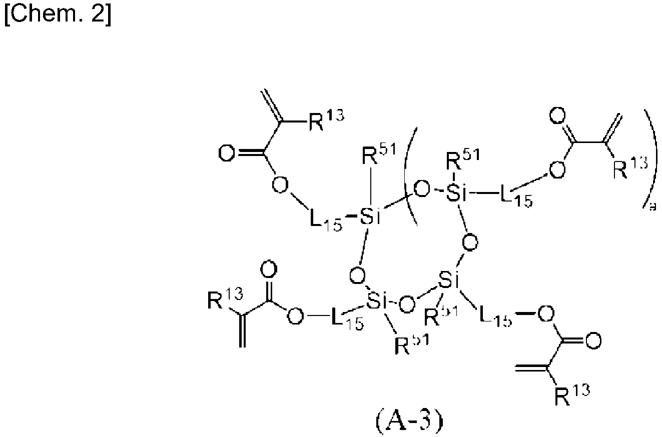
where, in General Formula (A-3),
R¹³ is each independently a hydrogen atom or a methyl group,
R⁵¹ is each independently an alkyl group having from 1 to 6 carbon atoms,
L₁₅ is each independently a divalent organic group optionally having an ether bond, and
a is a repeating unit and is an integer of from 0 to 3.

4. An anti-foaming agent comprising a polymer including, as at least a polymerization component, a polymerizable monomer (A") which is a compound represented by General Formula (A-4): 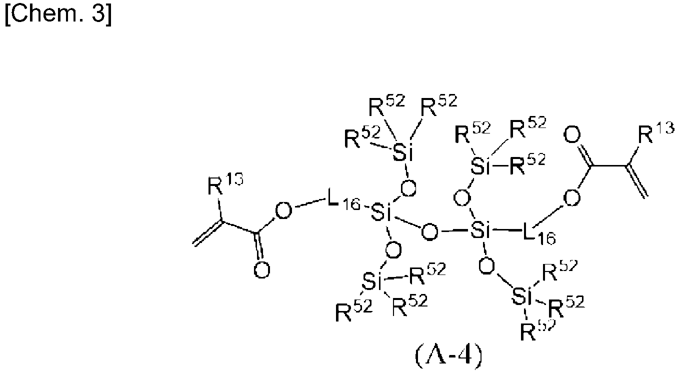
where, in General Formula (A-4),
R¹³ is each independently a hydrogen atom or a methyl group,
R⁵² is each independently an alkyl group having from 1 to 6 carbon atoms, and
L₁₆ is each independently a divalent organic group optionally having an ether bond.

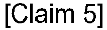

5. An anti-foaming agent comprising a polymer including, as at least a polymerization component, a polymerizable monomer (A‴) which is a compound represented by General Formula (A-5): 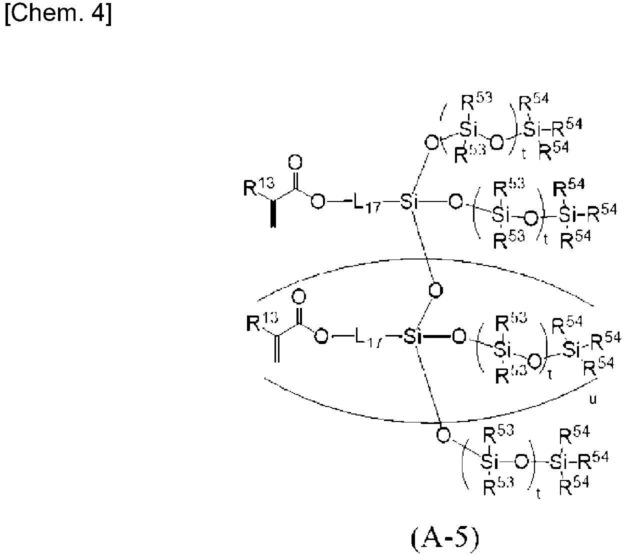
where, in General Formula (A-5),
R¹³ is each independently a hydrogen atom or a methyl group,
R⁵³ is each independently an alkyl group having from 1 to 6 carbon atoms,
R⁵⁴ is each independently an alkyl group having from 1 to 6 carbon atoms,
L₁₇ is each independently a divalent organic group optionally having an ether bond,
t is a repeating unit and is each independently an integer of from 1 to 100, and
u is a repeating unit and is an integer of from 1 to 10.

6. An anti-foaming agent comprising a polymer including, as at least a polymerization component, a polymerizable monomer (Aʺʺ) which is a compound represented by General Formula (A-6): 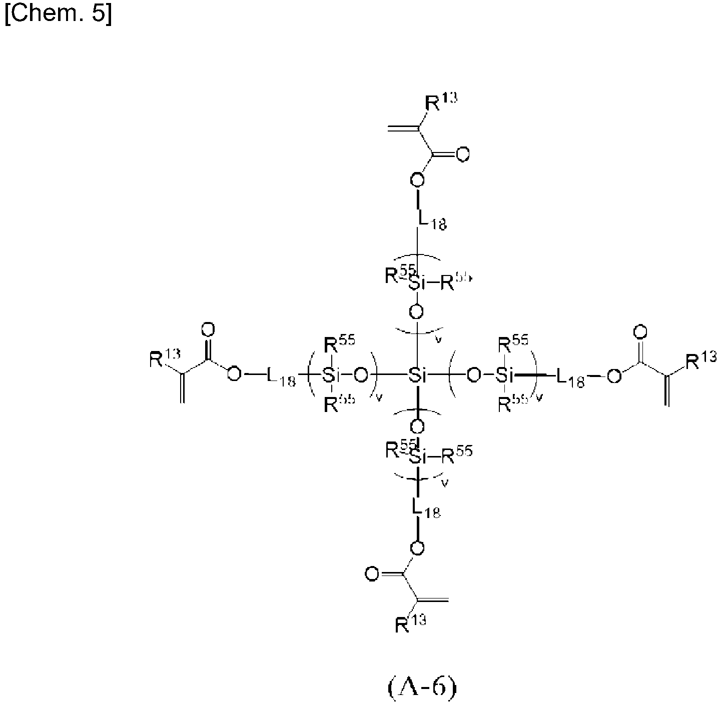
where, in General Formula (A-6),
R¹³ is each independently a hydrogen atom or a methyl group,
R⁵⁵ is each independently an alkyl group having from 1 to 6 carbon atoms,
L₁₈ is each independently a divalent organic group optionally having an ether bond, and
v is a repeating unit and is each independently an integer of from 1 to 100.

7. The anti-foaming agent according to any one of claims 1 to 6, wherein a content of the polymerizable monomer (A), the polymerizable monomer (A'), the polymerizable monomer (A"), the polymerizable monomer (A‴), or the polymerizable monomer (Aʺʺ) in the polymerization component is in a range of from 5 to 75 mass%.

8. The anti-foaming agent according to any one of claims 1 to 6, wherein the polymerization component includes one or more selected from an alkyl group having from 1 to 18 carbon atoms, an aromatic group having from 6 to 18 carbon atoms, a group containing a polyoxyalkylene chain, and a group containing a polyester chain and further includes a polymerizable monomer (B) having one polymerizable unsaturated group.

9. The anti-foaming agent according to claim 8, wherein the polymerizable monomer (B) is one or more selected from the group consisting of compounds represented by General Formulas (B-1) to (B-10): 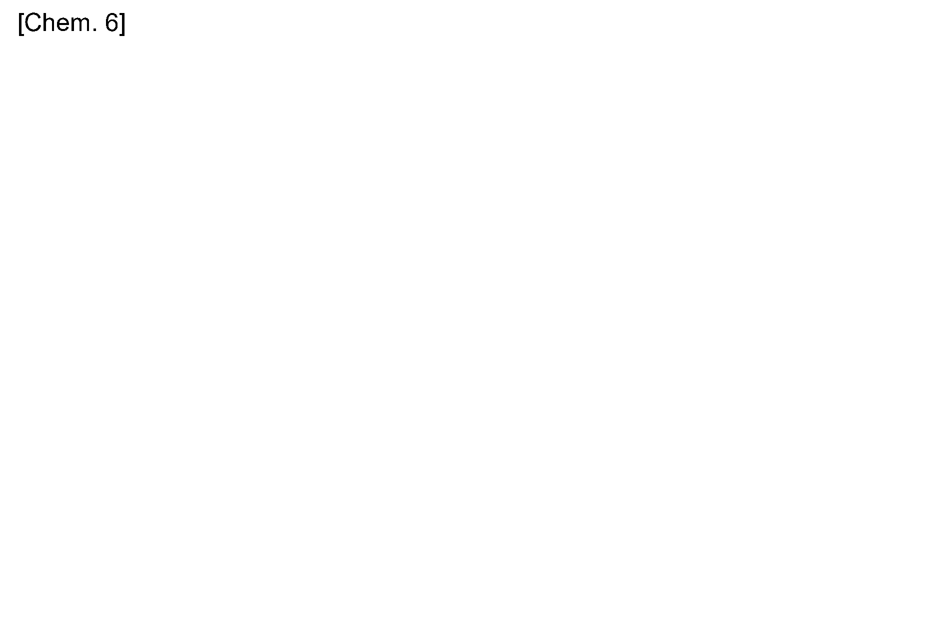 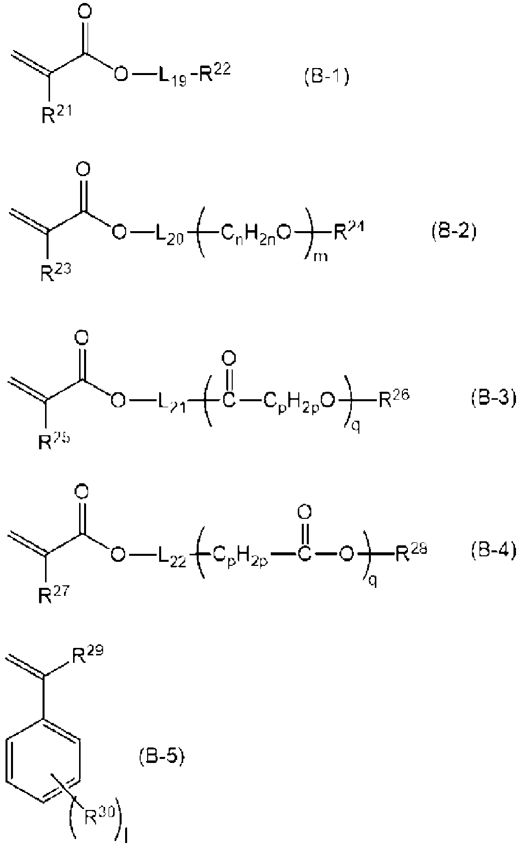 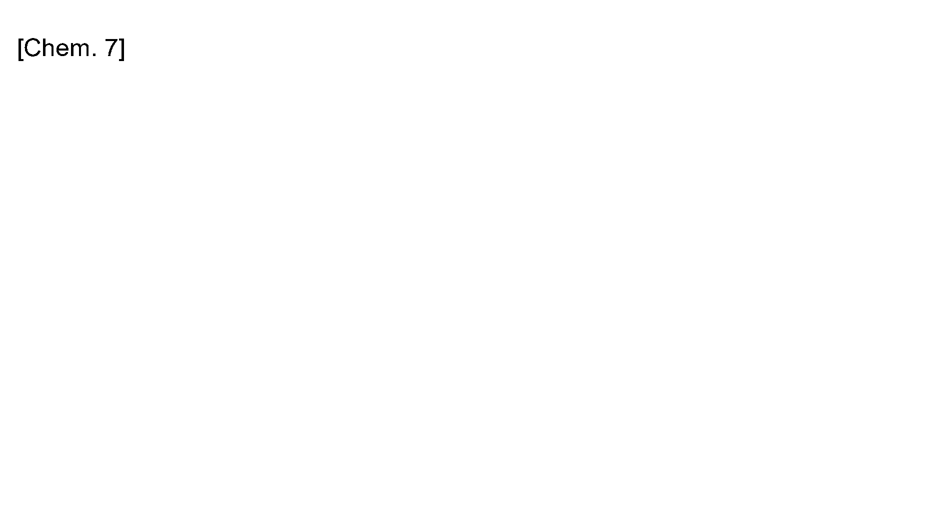 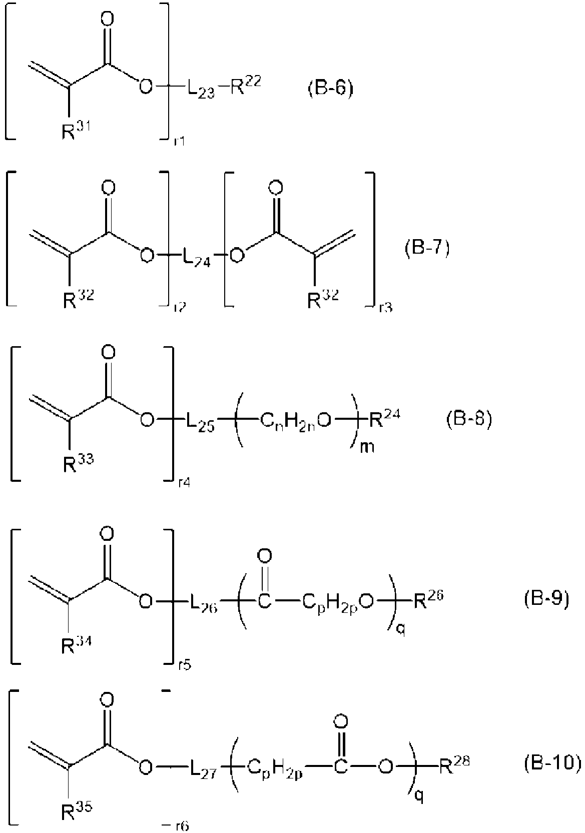
where, in General Formulas (B-1), (B-2), (B-3), (B-4), (B-5), (B-6), (B-7), (B-8), (B-9), and (B-10),
R²¹ is a hydrogen atom or a methyl group,
R²² is an alkyl group having from 1 to 18 carbon atoms,
R²³ is a hydrogen atom or a methyl group,
R²⁴ is a hydrogen atom or an alkyl group having from 1 to 18 carbon atoms,
R²⁵ is a hydrogen atom or a methyl group,
R²⁶ is a hydrogen atom, an alkyl group having from 1 to 18 carbon atoms, or an alkyl group having from 1 to 18 carbon atoms and having an ether bond,
R²⁷ is a hydrogen atom or a methyl group,
R²⁸ is a hydrogen atom, an alkyl group having from 1 to 18 carbon atoms, or an alkyl group having from 1 to 18 carbon atoms and having an ether bond,
R²⁹ is a hydrogen atom or a methyl group,
R³⁰ is each independently an alkyl group having from 1 to 6 carbon atoms or an alkoxy group having from 1 to 6 carbon atoms,
R³¹ to R³⁵ are each independently a hydrogen atom or a methyl group, L₁₉ and L₂₀ are each independently a single bond or a divalent organic group optionally having an ether bond,
L₂₁ and L₂₂ are each independently a single bond or a divalent organic group optionally having an ether bond,
L₂₃ is a single bond or an organic group optionally having an (r1 + 1)-valent ether bond,
L₂₄ is an organic group optionally having an (r2 + r3)-valent ether bond and/or an ester bond,
L₂₅ is an organic group optionally having an (r4 + 1)-valent ether bond,
L₂₆ is a single bond or an organic group optionally having an (r5 + 1)-valent ether bond,
L₂₇ is a single bond or an organic group optionally having an (r6 + 1)-valent ether bond,
m represents a number of repetitions, a number average value of m is in a range of from 1 to 200, p is an integer in a range of from 1 to 10, q represents a number of repetitions, a number average value of q is in a range of from 1 to 100, l is an integer in a range of from 0 to 5, r2 and r3 represent numbers of repetitions and are integers in a range of from 1 to 3, and r1, r4, r5, and r6 represent numbers of repetitions and are 2 or 3.

10. The anti-foaming agent according to claim 9, wherein the polymerizable monomer (B) contains the compound represented by General Formulas (B-2), (B-7), and (B-8).

11. The anti-foaming agent according to claim 8, wherein a content of the polymerizable monomer (B) in the polymerization component is in a range of from 5 to 75 mass%.

12. The anti-foaming agent according to any one of claims 1 to 6, wherein the polymerization component further includes a polymerizable monomer (C) having two or more polymerizable unsaturated groups other than the polymerizable monomer (A), the polymerizable monomer (A'), the polymerizable monomer (A"), the polymerizable monomer (A‴), and the polymerizable monomer (Aʺʺ).

13. The anti-foaming agent according to claim 12, wherein the polymerizable monomer (C) is a compound represented by General Formula (C-1): 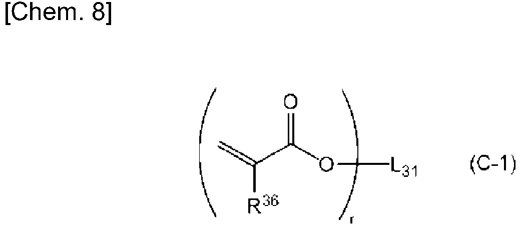
where, in General Formula (C-1),
R³⁶ is a hydrogen atom or a methyl group,
r is an integer of 2 or more, and
L₃₁ is an organic group optionally having an r-valent ether bond.

14. The anti-foaming agent according to claim 12, wherein a content of the polymerizable monomer (C) in the polymerization component is in a range of from 5 to 70 mass%.

15. The anti-foaming agent according to any one of claims 1 to 6, wherein a weight average molecular weight of the polymer is in a range of from 2000 to 200000.

16. The anti-foaming agent according to claim 1, comprising a polymerizable monomer (D) which is the polymerizable monomer (A) having one polymerizable unsaturated group.

17. The anti-foaming agent according to claim 16, wherein the polymerizable monomer (D) is a compound represented by General Formula (D-1): 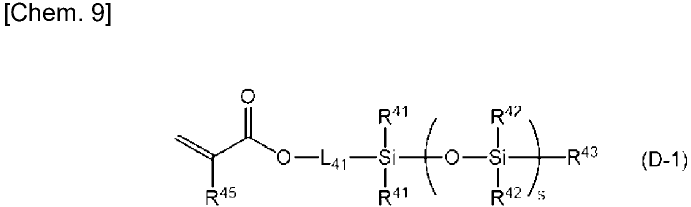
where, in General Formula (D-1),
R⁴¹ is each independently an alkyl group having from 1 to 6 carbon atoms or a group represented by -OSi(R⁴⁴)₃ (R⁴⁴ is each independently an alkyl group having from 1 to 3 carbon atoms),
R⁴² is each independently an alkyl group having from 1 to 6 carbon atoms,
R⁴³ is an alkyl group having from 1 to 12 carbon atoms,
R⁴⁵ is a hydrogen atom or a methyl group,
L₄₁ is a divalent organic group optionally having an ether bond, and
s represents a number of repetitions.

18. A lubricating oil composition comprising:
a lubricating base oil; and
the anti-foaming agent according to any one of claims 1 to 6.

19. The lubricating oil composition according to claim 18, which is used in a machine including an internal combustion engine or an electric motor for lubricating a drive unit of the machine.

20. The lubricating oil composition according to claim 18, which is used in an automobile including an internal combustion engine or an electric motor for lubricating a drive unit of the automobile.

21. A machine using the lubricating oil composition according to claim 18 in a drive unit.
